# EUROPÄISCHE PATENTSCHRIFT

(11) **EP 2 727 715 B1**
(45) Veröffentlichungstag und Bekanntmachung des Hinweises auf die Patenterteilung: **02.03.2022**
(21) Anmeldenummer: 13190408.8
(22) Anmeldetag: 28.10.2013
(51) Int. Cl.: B30B 11/20, B30B 11/22

(54) **PELLETPRESSE MIT EINER ABLÄNGVORRICHTUNG FÜR BIOGENE FASERHALTIGE PELLETS**
PELLET PRESS WITH DEVICE FOR CUTTING TO LENGTH OF BIOGENIC PELLETS CONTAINING FIBRES
PRESSE À GRANULÉS DOTÉE D'UN DISPOSITIF DE COUPE À LONGUEUR POUR DES GRANULÉS BIOGÈNES CONTENANT DES FIBRES

(30) Priorität: 06.11.2012 DE 102012110622
(43) Veröffentlichungstag der Anmeldung: 07.05.2014
(60) Teilanmeldung: 18156051.7
(73) Patentinhaber: Blieninger, Franz, 84034 Landshut (DE)
(72) Erfinder: Blieninger, Franz, 84034 Landshut (DE)
(74) Vertreter: Canzler & Bergmeier Patentanwälte Partnerschaft mbB

(56) Entgegenhaltungen:
- DE-U1- 29 919 030
- US-A- 2 252 900
- US-A- 2 565 830
- US-A- 2 870 481
- US-A- 3 950 120

## Beschreibung

Die vorliegende Erfindung betrifft zwei alternative Ablängvorrichtungen gemäß den Ansprüchen 1 und 8 für eine Pelletpresse mit zumindest einem Ablängmittel für biogene faserhaltige Pellets, insbesondere Holzpellets, und zumindest einem Befestigungsbereich, in dem die Ablängvorrichtung an einem feststehenden Gehäuseteil der Pelletpresse derart befestigbar ist, dass das Ablängmittel im radial äußeren Bereich einer drehbar gelagerten Ringmatrize der Pelletpresse, die radiale Durchgangsbohrungen aufweist, und zu dieser beabstandet angeordnet werden kann. Ferner betrifft die Erfindung eine Pelletpresse zum Pressen von biogenen faserhaltigen Pellets, insbesondere Holzpellets, mit einer rotierbaren Ringmatrize, die im Wesentlichen radiale Durchgangsbohrungen aufweist und in ihrem Inneren einen Pressraum ausbildet, in den biogenes faserhaltiges Pressmaterial zuführbar ist, mit zumindest einem Koller, der zu der Ringmatrize exzentrisch angeordnet ist und sich an deren Innenumfang derart abzurollen vermag, dass das Pressmaterial zur Ausbildung der Pellets durch die Durchgangsbohrungen gepresst wird, und mit zumindest einer ein Ablängmittel aufweisenden Ablängvorrichtung, die an einem feststehenden Gehäuseteil der Pelletpresse derart befestigt ist, dass das Ablängmittel im radial äußeren Bereich der drehbar gelagerten Ringmatrize zu dieser beabstandet angeordnet ist.

Gleichfalls betrifft die Erfindung entsprechende Verfahren gemäß den Ansprüchen 15 und 16.

In der holzverarbeitenden Industrie fallen große Mengen an Sägenebenprodukten an. Darunter sind in erster Linie Sägespäne, Hobelspäne und Hackschnitzel zu verstehen, aus denen üblicherweise Holzpellets hergestellt werden. Ein solcher stäbchenförmiger Holzpellet hat beispielsweise einen Durchmesser zwischen 4 mm bis 10 mm, ist zwischen 5 mm bis 45 mm lang, besitzt eine Rohdichte zwischen etwa 1,1 bis 1,3 kg/dm³ und hat eine Energiedichte von etwa 5 kWh/kg. Die Herstellung der Pellets erfolgt in einer bekannten Ring- bzw. Rund- oder Flachmatrizenpresse, in welcher Kollerrollen das Pressgut durch die Bohrungen bzw. Presskanäle der Matrize drücken. Dabei treten Temperaturen von über 120°C und sehr hohe Drücke auf, wobei diese im Bereich der Wandungen der Presskanäle am höchsten sind. Als Folge ist die zylindrische Oberfläche der Pellets sehr glatt ausgebildet und weist eine sehr hohe Dichte auf.

Die Presskanäle weisen auf der Einlaufseite eine wenige Millimeter tiefe konische Einlauf-Fase auf. Bei näherer Betrachtung eines einzelnen Presskanals ist festzustellen, dass die Verdichtung des faserigen und feinen Spanmaterials zyklisch bei jedem Vorbeilauf eines Kollers erfolgt. Durch die trichterförmige Fase wird eine trichterförmige Faserstruktur in den Pellets ausgebildet. Deshalb besitzen Pellets an ihrer Vorderseite eine konvexe und an ihrer Hinterseite eine konkave Stirnfläche. Eine Pelletmatrize für 6 mm dicke Pellets hat bei einer Presskanalbohrung von beispielsweise 6 mm Durchmesser eine Presskanallänge von etwa 40 mm und weitet sich radial nach außen hin stufenweise nach jeweils 20 Millimetern auf 6,4 mm, 6,8 mm und 7,2 mm auf. Der Hintergrund hierfür ist, dass der verpresste Fasermaterialstrang nach dem eigentlichen Presskanalabschnitt mit dem 6 mm Durchmesser noch weiter geführt werden soll und eine gewisse Materialstärke der Matrize aus Gründen der Materialfestigkeit notwendig ist. Die Stirnflächen der Pellets weisen eine sehr unregelmäßige, raue und spröde Oberfläche auf. Aufgrund dessen sind die Stirnflächen der Pellets hauptverantwortlich für das Entstehen von störenden Feinanteilen und Staub bei jeder Manipulation der Pellets.

Pellets werden in der Regel mittels Silo-Pumpwagen in Vorratsbunker eingeblasen. Es hat sich gezeigt, dass die langen Pellets in den Blasleitungen in der Mitte des Rohrquerschnitts in einem Winkel von etwa 45° gegen die Luftstromrichtung fast berührungsfrei durch die Schlauchleitungen "fliegen". Lange Pellets besitzen bessere "Flugeigenschaften" als kurze Pellets. Deshalb befinden sich während des Einblasvorgangs die kurzen Pellets zusammen mit den Bruchstücken vorwiegend am Boden der Blasschläuche, wo sie im Wesentlichen rollend befördert werden. Hierbei kommen sie mit der Schlauchunterseite in Kontakt und kollidieren mit den Schlauchkupplungen, wodurch weitere Feinanteil erzeugt werden. Kurze Pellets, Pelletbruch und Staub haben ein deutlich schlechteres Fließverhalten als gleichmäßig lange Pellets.

Die Stirnflächen haben eine wesentlich höhere Reibung in Pelletschüttungen als die glatten Zylinderoberflächen. Der prozentuale Anteil der Stirnflächen sinkt linear mit wachsender Durchschnittslänge der Pellets. Die ideale Länge von Pellets liegt für Pellet-Kleinfeuerungen bei etwa 25-35 mm. Die Maximallänge von Holzpellets ist durch die Europanorm EN 14961-2 mit der Formel 7,5 x D (Durchmesser) festgelegt. Für die für Kleinfeuerungen handelsüblichen Pellets mit 6 mm Durchmesser bedeutet dies eine Maximallänge von 45 mm.

Die am Markt üblicherweise verwendeten Schneidetechniken weisen in dieser Hinsicht einige Schwächen auf. Bei Rundmatrizen sind von dieser beabstandet im radial äußeren Bereich feststehende Querstege aus Flachstahl angeordnet. Der Pellet wächst zunächst durch den Presskanal aus der Ringmatrize heraus, die mit einer hohen Geschwindigkeit rotiert. Sobald ein Pellet lang genug ist, schlägt er während seines Umlaufs gegen einen der Querstege, wobei er von der Ringmatrize abgebrochen wird. Die als Flacheisen ausgebildeten Querstege sind zur Umlaufrichtung der Ringmatrize um 90° verdreht. Infolgedessen werden die Pellets beim senkrechten Auftreffen auf den Quersteg schlagartig abgebremst. Die Pellets sind noch sehr heiß (knapp unter 100°C), mechanisch instabil und noch weich. Die Bahngeschwindigkeit einer Rundmatrize beträgt etwa 7,5 m/sec. Die Pellets werden beim Abschlagen von dem stehenden und im 90°-Winkel zur Drehrichtung angeordneten Quersteg also stark beschleunigt und in Rotation versetzt. Danach schlagen diese noch mit hoher Geschwindigkeit gegen weitere Querstege oder gegen andere Bauteile der Pelletpresse. Beim Abtrennen von der Ringmatrize und/oder beim anschließenden Aufprallen auf weitere Bauteile der Pelletpresse brechen die Pellets unkontrolliert in verschieden lange Pelletstücke. Des Weiteren wird hierbei viel Bruchstaub erzeugt. Der gemäß der bekannten Schneidetechnik erzeugte Feinanteil beträgt bei einer Ringmatrize mit 6 mm Lochdurchmesser etwa 5%-8%.

Aus der US 2 252 900 A ist eine Ablängvorrichtung bekannt, bei der eine dreieckförmige Platte oberhalb der Ringmatrize angeordnet ist und mit ihrem Scheitelpunkt entgegen die Umlaufrichtung der Ringmatrize ausgerichtet ist. Dieser Scheitelpunkt ist zudem - von oben auf die Oberfläche der Ringmatrize gesehen - zwischen zwei Reihen von Bohrungen in der Ringmatrize angeordnet, in welchen die Pellets entstehen. Die maximale Breite des dreieckförmigen Körpers ist zudem größer als der Abstand der besagten zwei Reihen. Die in Bohrungen entstehenden und aus diesen herausragenden Pellets laufen beim Umlauf der Ringmatrize jeweils gegen einer der beiden seitlichen Flanken des dreieckformigen Körpers an und werden hierdurch mehr und mehr lateral, d.h. senkrecht zur Umfangsrichtung, abgelenkt, bis sie an ihrem Fuß brechen. Mit dieser Anordnung lassen sich auf relativ schonende Art und Weise Pellets herstellen. Die Pelletqualität und die Reduzierung des Bruchstaubs sind allerdings immer noch verbesserungswürdig.

Aufgabe der vorliegenden Erfindung ist es somit, eine Ablängvorrichtung sowie eine Pelletpresse mit einer entsprechenden Ablängvorrichtung zu schaffen, mittels derer möglichst gleichmäßig lange Pellets oder eine gewünschte Längenverteilung der Pellets bei zugleich geringer Bruchstaubproduktion produzierbar sind.

Die Aufgabe wird gelöst durch zwei alternative Ablängvorrichtungen sowie eine Pelletpresse mit den Merkmalen der unabhängigen Patentansprüche 1 und 8 sowie entsprechende Verfahren nach den Ansprüchen 15 und 16.

Die erfindungsgemäße erste Ablängvorrichtung für eine Pelletpresse weist zumindest ein Ablängmittel für biogene faserhaltige Pellets, insbesondere Holzpellets, auf. Ferner umfasst die Ablängvorrichtung zumindest einen Befestigungsbereich, in dem die Ablängvorrichtung an einem feststehenden Gehäuseteil der Pelletpresse derart befestigbar ist, dass das Ablängmittel im radial äußeren Bereich einer drehbar gelagerten Ringmatrize der Pelletpresse, die radiale Durchgangsbohrungen aufweist, und zu dieser beabstandet angeordnet werden kann. Das Ablängmittel weist eine konkave bogenförmige Kontur, insbesondere Innenkontur, auf. Die konkave bogenförmige Kontur ist vorzugsweise gegenüber einer kreisbogenförmigen Kontur gestaucht oder gestreckt. Alternativ kann diese aber auch als kreisbogenförmige Kontur ausgebildet sein. Das Ablängmittel ist mittels des Befestigungsbereiches derart im radial äußeren Bereich der Ringmatrize anbringbar, dass sich das Ablängmittel mit seiner bogenförmigen Kontur im Wesentlichen helixförmig über zumindest einen Bereich einer der radialen Durchgangsbohrungen der dafür vorgesehenen Ringmatrize erstreckt. Die Abmaße dieses Bereiches - über den sich das Ablängmittel über zumindest eine der radialen Durchgangsbohrungen der Ringmatrize erstreckt - ist vorzugsweise in Axialrichtung der Ringmatrize größer oder gleich dem Durchmesser der Durchgangsbohrung (D) und in Umfangsrichtung der Ringmatrize größer oder gleich D / tan α, wobei α der Steigungswinkel des sich helixförmig erstreckenden Ablängmittels ist. Das Ablängmittel weist demnach zumindest eine Länge L größer oder gleich D / sin α auf.

Durch diese Ausgestaltung und Anordnung des Ablängmittels gegenüber der dafür vorgesehenen Ringmatrize kommt ein Pellet, das über die Ringmatrize in deren Radialrichtung mit einer größeren Länge als der Abstand zwischen Ringmatrize und Ablängmittel aus der Durchgangsbohrung hinausragt, im Bereich seines freien Endes, insbesondere mit seiner Seitenfläche, am Ablängmittel zum Anliegen. Ferner vermag sich das Pellet zunächst an diesem in Umfangsrichtung derart entlang zu bewegen, dass das Pellet vom Ablängmittel mittels einer eine Axialkomponente aufweisenden Kraft, vorwiegend in Axialrichtung der Ringmatrize, ausgelenkt wird, so dass es im Bereich der Ringmatrize abknickt. Das Pellet wird somit nicht abrupt abgebremst, sondern über die Strecke eines definierten Winkelbereiches der Ringmatrize, der insbesondere durch den Steigungswinkel des helixförmigen Ablängmittels beeinflussbar ist, in Umfangsrichtung geführt und hierbei zugleich immer mehr aus seiner radialen Ausgangsstellung ausgelenkt, bis der Pellet sanft abknickt bzw. von der Ringmatrize abgetrennt wird. Hierdurch wird ein undefiniertes Brechen oder Ablängen des Pellets in unterschiedlich lange Pelletstücke vermieden. Infolgedessen weisen die Pellets vorteilhafterweise eine durch den Abstand zwischen dem Außenumfang der Ringmatrize und der Innenkontur des Ablängmittels bestimmte im Wesentlichen konstante oder sich in einem Spektrum variierende Länge auf. Hierdurch kann der Anteil von unerwünschten "Kurzpellets" unter 14 mm von bisher durchschnittlich 60% auf unter 10% reduziert werden. Des Weiteren kann der beim Abtrennen entstehende Feinstaubanteil um bis zu 80% reduziert werden, wodurch die Produktionskosten gesenkt und der Durchsatz erhöht werden kann.

Ferner werden die abgetrennten Pellets in Axialrichtung der Ringmatrize mittels des sich in Axialrichtung helixförmig erstreckenden Ablängmittels geführt. Hierdurch wird vermieden, dass die abgetrennten Pellets undefiniert an dafür nicht vorgesehene Bereiche der Pelletpresse geschleudert werden, wodurch diese beschädigt werden oder aber auch in zumindest zwei kürzere undefiniert lange Pelletstücke zerbrechen könnten. Das Ablängmittel ist demnach derart geformt, dass die Pellets sanft abgeknickt und zu einem Auswurfbereich der Pelletpresse in Axialrichtung geführt werden.

Erfindungsgemäß weist die erste Ablängvorrichtung einen Grundkörper mit einer konkaven, insbesondere kreisbogenförmigen, Radialleitfläche auf. In deren Bereich ist das Ablängmittel angeordnet. Vorzugsweise ist das erste Ablängmittel an einer der Ringmatrize zugewandten Innenfläche der Radialleitfläche angeordnet. Die Ablängvorrichtung ist zu der dafür vorgesehenen Ringmatrize vorzugsweise derart angeordnet, dass die Ringmatrize und die kreisbogenförmige Radialleitfläche konzentrisch zueinander und/oder voneinander, insbesondere durch einen ersten Ringspalt, beabstandet angeordnet sind. Für bereits von der Ringmatrize abgetrennte Pellets als auch für Pellets, die im Bereich der Durchgangsbohrung der Ringmatrize gebrochen sind, wirkt die kreisbogenförmige Radialleitfläche erfindungsgemäß als radiales Führungsmittel. Infolgedessen fliegen durch das Ablängmittel abgetrennte und/oder insbesondere durch Vibrationen im Bereich der Durchgangsbohrung gebrochene Pellets nicht unkontrolliert radial nach außen, wo sie gegen scharfkantige Flächen der Pelletpresse prallen und in undefiniert lange Bruchstücke zerbrechen könnten. Stattdessen werden diese Pellets durch die kreisbogenförmige Radialleitfläche in einem definierten Abstand zum Außenumfang der Ringmatrize in Radialrichtung der Ringmatrize geführt und/oder gezielt in einen Auffangbereich der Pelletpresse geleitet. Ferner führt die Radialleitfläche die, insbesondere durch Vibrationen, im Bereich der Durchgangsbohrung gebrochene Pellets zu dem Ablängmittel hin. Das Ablängmittel ist durch einen zweiten Ringspalt von der Ringmatrize beabstandet. Die radiale Breite des zweiten Ringspalts ist größer als die radiale Breite des ersten Ringspalts. Sobald die von der Radialleitfläche zum Ablängmittel hingeführten Pellets mit dem Ablängmittel in Kontakt kommen, werden diese durch das Ablängmittel sanft abgeknickt. Die radiale Breite des ersten Ringspaltes definiert somit die maximale Länge der Pellets.

Vorteilhaft ist es, wenn die Radialleitfläche zumindest in einem Bereich, insbesondere im Bereich zumindest eines ihrer beiden in Umfangsrichtung zeigenden Enden, in Richtung zumindest einer ihrer beiden in Axialrichtung zeigenden Stirnseiten geneigt ist. Mittels dieses in Axialrichtung verlaufenden Gefälles der Radialleitfläche können abgetrennte Pellets schnell aus dem Abtrennbereich der Ablängvorrichtung abgeführt werden. Vorzugsweise ist die Radialleitfläche im Querschnitt, insbesondere in Axialrichtung, im Wesentlichen satteldachförmig ausgebildet. Hierdurch können die Pellets in Richtung ihrer beiden axialen Stirnseiten abgeführt werden.

Vorteilhaft ist es, wenn der Abstand in Radialrichtung der Ringmatrize zwischen dem Ablängmittel und der dafür vorgesehenen Ringmatrize, vorzugsweise im Bereich zumindest einer der radialen Durchgangsbohrungen bzw. über die zumindest zum Abknicken eines Pellets benötigte Länge L des Ablängmittels, im Wesentlichen konstant ist. Hierdurch kann sichergestellt werden, dass das abzuknickende Pellet, unmittelbar nachdem es in den Bereich des Ablängmittels gelangt, insbesondere seitlich am Ablängmittel und/oder insbesondere stirnseitig an der Radialleitfläche zum Anliegen kommt. Vorzugsweise wird das Pellet von dem Ablängmittel, insbesondere einer Anlagefläche des Ablängmittels, über dessen gesamte Abknicklänge L geführt.

Wenn das Ablängmittel derart lang ausgebildet ist, dass es sich über den Bereich zumindest zweier radialer Durchgangsbohrungen bzw. zweier Bohrungsringe - die durch die in Umfangsrichtung hintereinander angeordneten Durchgangsbohrungen ausgebildet sind - erstreckt, ist es vorteilhaft, wenn der Abstand zwischen Ablängmittel und Ringmatrize über die gesamte Länge konstant ist. Somit weisen die im Bereich der ersten Durchgangsbohrung bzw. des ersten Bohrungsrings abgescherten Pellets die gleiche Länge auf wie die im Bereich der zweiten Durchgangsbohrung bzw. des zweiten Bohrungsrings abgescherten Pellets.

Alternativ oder zusätzlich kann die im Wesentlichen bogenförmige Kontur des Ablängmittels aber auch derart ausgebildet sein, dass der Abstand zwischen Ablängmittel und Ringmatrize variabel ausgebildet ist, so dass der Abstand zwischen Ablängmittel und Ringmatrize im Bereich eines ersten Bohrungsrings größer oder kleiner als der Abstand zwischen diesen beiden im Bereich eines zweiten Bohrungsrings ausgebildet ist. Vorzugsweise ist das Ablängmittel hierfür im Bereich der bogenförmigen Kontur gestuft und/oder von einem Ende des Ablängmittels bis zu seinem anderen Ende hin, insbesondere linear oder wellenförmig, abfallend oder ansteigend ausgebildet. Vorteilhafterweise werden die Pellets somit nicht alle in derselben Länge von der Ringmatrize abgetrennt, sondern innerhalb eines Längenspektrums, das durch die Ausgestaltung der bogenförmigen Kontur beeinflussbar ist. Demnach weisen die von dem Ablängmittel im Bereich des ersten Bohrungsrings abgetrennten Pellets im Vergleich zu denen im Bereich des zweiten Bohrungsrings abgetrennten Pellets eine zueinander unterschiedliche Länge auf.

Der Längenbereich bzw. das Längenspektrum, in dem der Abstand des Ablängmittels gegenüber der Ringmatrize variiert, bestimmt die gaußsche Längenverteilungskurve der Pellets. Besonders lange Pellets mit einer möglichst geringen Schwankungsbreite (steile und enge Gaußkurve) werden beispielsweise für die Pelletvergasung in KWK-Anlagen (Kraft-Wärme-Kopplung) bevorzugt verwendet. Mittellange Pellets mit einer etwas breiteren Verteilung erhöhen das Volumengewicht und werden gerne im Kleinfeuerungsbereich verwendet, wo die Energiedichte eine wichtige Rolle spielt.

Vorteilhaft ist es, wenn das helixförmige Ablängmittel einen Steigungswinkel von weniger als ± 90°, vorzugsweise weniger als ± 60°, besonders vorzugsweise weniger als ± 45°, aufweist. Das Ablängmittel ist somit gegenüber der Axialachse der Ringmatrize schräg angeordnet. Infolgedessen können sich die noch nicht abgetrennten Pellets an dem Ablängmittel in Umfangsrichtung der Ringmatrize zumindest über einen geringen Winkelbereich entlang bewegen, so dass sie durch das Ablängmittel nicht abrupt abgebremst werden. Ein undefiniertes Brechen der Pellets kann somit vermieden werden. Die Pellets werden somit vorteilhafterweise im Wesentlichen mit einer konstanten Länge oder innerhalb eines Längenspektrums von der Ringmatrize abgetrennt bzw. abgeknickt.

Die Pellets werden insbesondere dann besonders sanft abgeknickt, wenn der Steigungswinkel des helixförmigen Ablängmittels sehr klein gewählt ist, insbesondere in einem Bereich zwischen 1° bis 15°, besonders vorzugsweise in einem Bereich zwischen 5° bis 10°.

In Abhängigkeit des Steigungswinkelvorzeichens und der Rotationsrichtung der Ringmatrize kann die Führrichtung der abgetrennten Pellets in Axialrichtung beeinflusst werden. Vorzugsweise ist das Steigungswinkelvorzeichen des Steigungswinkels gegenüber der Drehrichtung der Ringmatrize derart gewählt, dass die abgetrennten Pellets in eine der beiden Axialrichtungen der Ringmatrize geführt werden, insbesondere in Richtung eines als Deckel ausgebildeten feststehenden Gehäuseteils der Pelletpresse. Hierdurch kann vermieden werden, dass die abgetrennten Pellets willkürlich in der Pelletpresse herumfliegen und gegen Kanten der Pelletpresse stoßen, wodurch die Pellets in zumindest zwei undefiniert lange Teile zerbrechen können.

Zum Ausgleich von Fertigungstoleranzen sowie um den Steigungswinkel für unterschiedliche biogene faserhaltige Pressmaterialien einstellen zu können, ist es vorteilhaft, wenn der Steigungswinkel des Ablängmittels verstellbar ausgebildet ist. Somit kann dieser im Rahmen eines iterativen Optimierungsprozesses derart angepasst werden, dass eine optimale vorzugsweise im Wesentlichen konstante Länge der Pellets sichergestellt werden kann.

Vorteilhaft ist es, wenn das Ablängmittel zumindest zwei aneinander angrenzende Bereiche mit zueinander unterschiedlichen Steigungswinkeln aufweist. Hierdurch kann der Abtrennprozess des Pellets von der Ringmatrize optimal ausgelegt werden, so dass die Pellets stets in einer im Wesentlichen konstanten Länge oder einem definierten Längenspektrum abgetrennt werden, ohne dass diese oder der in den Durchgangsbohrungen der Ringmatrize verbleibende restliche Teil des Pellets zusätzlich gebrochen wird. Vorzugsweise wird der über die Ringmatrize in Radialrichtung hervorstehende Pellet zunächst in einem mit einem geringeren Steigungswinkel ausgebildeten ersten Bereich im Wesentlichen leicht ausgelenkt und erst in einem daran anschließenden mit einem größeren Steigungswinkel ausgebildeten zweiten Bereich vollständig abgeknickt.

In einer vorteilhaften Weiterbildung der Erfindung weist das helixförmige Ablängmittel zum axialen Führen und/oder Auslenken des Pellets eine Anlagekante und/oder Anlagefläche auf. Mittels der Anlagekante kann die Berührungsfläche und die damit einhergehende Reibung zwischen dem Ablängmittel und dem Pellet reduziert werden. Hierdurch kann vermieden werden, dass das Pellet im Bereich des Ablängmittels durch Reibkräfte in zwei undefiniert lange Teile zerbricht. Wenn das Ablängmittel eine Anlagefläche aufweist, kann eine sehr gute Führung des Pellets beim Entlangführen an dem Ablängmittel, aber auch im bereits abgetrennten Zustand bewirkt werden. Vorzugsweise wird das Pellet nach dem Abtrennen mittels der Anlagefläche in Axialrichtung der Ringmatrize in den Bereich einer Auswurföffnung der Pelletpresse geführt. Vorzugsweise ist die Anlagekante und/oder Anlagefläche gegenüber der Radialleitfläche derart winklig angeordnet, dass das Pellet mit seiner Stirnseite an der Radialleitfläche und die Anlagekante und/oder Anlagefläche an dessen zylindrischer Seitenfläche zum Anliegen kommt. Die Radialleitfläche ist demnach vorzugsweise in Radialrichtung der Ringmatrize und die Anlagefläche in Axial- und Umfangsrichtung der Ringmatrize orientiert.

Vorteilhaft ist es, wenn sich das Ablängmittel im Wesentlichen helixförmig über zumindest einen Bereich der kreisbogenförmigen Radialleitfläche, insbesondere in Umfangsrichtung über seine gesamte Länge, erstreckt. Somit werden die Pellets unmittelbar nach dem Abknicken im radial äußeren Bereich der Ringmatrize oder aber auch, wenn diese in der Durchgangsbohrung der Ringmatrize vor dem definierten Abknicken bereits gebrochen waren, von der unmittelbar an das Ablängmittel angrenzenden kreisbogenförmigen Radialleitfläche in Radialrichtung der Ringmatrize geführt. Hierdurch wird ein unkontrolliertes Herumschleudern der abgetrennten Pellets im Inneren der Pelletpresse vermieden.

Vorteilhafterweise ist die Anlagekante, Anlagefläche und/oder Radialleitfläche zur Reduktion der Reibung zwischen Ablängvorrichtung und Pellet glatt ausgebildet. Zusätzlich oder alternativ ist es vorteilhaft, wenn die Anlagekante, Anlagefläche und/oder Radialleitfläche zumindest eine Schmieröffnung für ein Schmiermittel, insbesondere ein natürliches Pflanzenöl, aufweist. Somit kann sichergestellt werden, dass die über die Ringmatrize radial hervorstehenden Pellets aufgrund von Reibkräften nicht ruckartig abgebremst werden, wodurch sie unkontrolliert in unterschiedlichen Längen abgeknickt bzw. abgebrochen werden würden. Stattdessen können sie somit möglichst reibungsarm an der Anlagekante, Anlagefläche und/oder Radialleitfläche von diesen in Radial- und/oder Axialrichtung geführt entlang gleiten.

Vorteilhaft ist es, wenn das Ablängmittel, insbesondere in der Radialleitfläche, als Absatz, Rippe und/oder Nut ausgebildet ist. Ein als Absatz ausgebildetes Ablängmittel hat den Vorteil, dass es sehr robust ausgebildet ist und somit eine sehr hohe Lebensdauer aufweist. Wenn das Ablängmittel als Rippe ausgebildet ist, kann es vorteilhafterweise auch im Bereich eines Kollers der Pelletpresse angeordnet werden, da somit die radial innere Fläche des Ablängmittels flächenmäßig sehr klein gehalten werden kann und infolgedessen nur ein verschwindend geringer Prozentsatz der im Bereich der Koller radial nach außen wachsenden Pellets mit der Stirnseite ihres freien Endes gegen die radial innere Endfläche des Ablängmittels bzw. der Rippe stoßen. Des Weiteren kann bei einem als Rippe ausgebildeten Ablängmittel eine Verstellbarkeit des Steigungswinkels der Rippe und/oder Verstellbarkeit der Rippe gegenüber der Radialleitfläche konstruktiv einfach umgesetzt werden. Wenn das Ablängmittel als Nut ausgebildet ist, kann eine gezielte Ablängung von Pellets erfolgen, die bereits im Bereich der Durchgangsbohrung der Ringmatrize gebrochen sind und aufgrund ihrer Zentrifugalkraft nach außen in die Nut gedrückt werden.

Vorteilhaft ist es, wenn die Ablängvorrichtung zumindest ein zweites Ablängmittel aufweist, das zum ersten Ablängmittel in Axial- und/oder Umfangsrichtung der Ringmatrize beabstandet oder benachbart angeordnet ist. Bei einer in Axialrichtung beabstandeten oder benachbarten Anordnung der beiden Ablängmittel zueinander kann vorteilhafterweise der Steigungswinkel der beiden Ablängmittel sehr gering gehalten werden. Infolgedessen muss das Pellet in Umfangsrichtung einen sehr langen Weg zurücklegen, bis es von einem der Ablängmittel in Axialrichtung umgeknickt wird, so dass diese Abtrennung sehr sanft und schonend erfolgt. Bei einer in Umfangsrichtung der Ringmatrize beabstandeten Anordnung zweier Ablängmittel zueinander kann vorteilhafterweise im Bereich eines Koller ein Freiraum ausgebildet sein, so dass die in diesem Bereich radial nach außen wachsenden Pellets durch keine der Ablängmittel an ihrer radialen Ausdehnung gehindert werden.

Sehr geringe Steigungswinkel der Ablängmittel und eine damit einhergehende sanfte Abtrennung der Pellets von der Ringmatrize kann sichergestellt werden, wenn die beiden Ablängmittel zueinander parallel oder spiegelverkehrt angeordnet sind, vorzugsweise derart, dass sie eine in Drehrichtung der Ringmatrize auseinander- oder zusammenlaufende V-Form ausbilden.

Auch ist es vorteilhaft, wenn die Ablängvorrichtung als Ringsegment oder geschlossener Ring ausgebildet ist. So können bspw. bei einer als Ringsegment ausgebildeten Ablängvorrichtung mehrere Ablängvorrichtungen in Umfangsrichtung der Ringmatrize zueinander beabstandet oder benachbart angeordnet werden. Wenn die Ablängvorrichtung als geschlossener Ring ausgebildet ist, kann ein Austausch dieser Ablängvorrichtung, bspw. zum Umrüsten der Pelletpresse, sehr schnell und kostengünstig erfolgen.

Ebenso ist es vorteilhaft, wenn die Ablängvorrichtung im Befestigungsbereich eine Befestigungseinrichtung zum lösbaren Befestigen an dem feststehenden Gehäuseteil der Pelletpresse und/oder zum, insbesondere stufenlosen, Verstellen gegenüber dieser in Radialrichtung aufweist. Die Befestigungseinrichtung ist vorzugsweise als sich in Radialrichtung erstreckendes Stabelement ausgebildet, das in einer Aussparung des feststehenden Gehäuseteils der Pelletpresse rotatorisch und axial geführt und fixierbar ist.

Um zu vermeiden, dass aus den Durchgangsbohrungen der Ringmatrize herausragende Pellets in einer undefinierten Länge von bereits abgetrennten und im Bereich zwischen dem Außenumfang der Ringmatrize und der Radialleitfläche herumfliegenden Pellets abgeschlagen werden, ist es vorteilhaft, wenn der Grundkörper der Ablängvorrichtung zumindest eine Ausführöffnung und/oder zumindest einen, insbesondere an diese anschließenden, Ausführkanal für die definiert abgeknickten Pellets aufweist. Die Ausführöffnung ist hierbei vorzugsweise derart ausgebildet und/oder derart, insbesondere im Bereich der Radialleitfläche und/oder des Ablängmittels, angeordnet, dass die abgetrennten Pellets durch die Zentrifugalkraft, vorzugsweise unmittelbar, von der der Ringmatrize zugewandten Innenseite der Ablängvorrichtung, insbesondere durch den Grundkörper hindurch, radial nach außen führbar sind. Nachdem die abgeknickten Pellets über die zumindest eine Ausführöffnung aus dem Ringspalt, d.h. aus dem Bereich zwischen Ringmatrize und Ablängvorrichtung, ausgetreten sind, werden diese mittels des zumindest einen Ausführkanals, insbesondere in Axialrichtung der dafür vorgesehenen Pelletpresse, zu dem Auswurfbereich der Pelletpresse geführt. Hierdurch wird vorteilhafterweise ein Pelletstau im Bereich des Ablängmittels vermieden, so dass die Ablängwirkung des Ablängmittels nicht negativ durch die bereits abgelängten Pellets beeinflusst wird.

Um ein möglichst schnelles Abführen der abgetrennten Pellets aus dem Ringspalt bzw. Ringspaltsegment sicherstellen zu können, ist es vorteilhaft, wenn die Ausführöffnung, insbesondere unmittelbar und/oder radial außenliegend, benachbart zum Ablängmittel angeordnet ist. Diesbezüglich ist es ferner vorteilhaft, wenn die Ausführöffnung, insbesondere in Radialrichtung der Ringmatrize, zwischen dem radial inneren Ablängmittel und der dazu radial äußeren Radialleitfläche ausgebildet ist.

Die abgetrennten Pellets können schnell und schonend aus dem Ringspalt entfernt werden, wenn die Ausführöffnung gegenüber der Radialleitfläche, insbesondere um 90 °, winklig angeordnet ist.

Die erfindungsgemäße zweite Ablängvorrichtung für eine Pelletpresse weist zumindest ein Ablängmittel für biogene faserhaltige Pellets, insbesondere Holzpellets, auf. Ferner umfasst die Ablängvorrichtung zumindest einen Befestigungsbereich, in dem die Ablängvorrichtung an einem feststehenden Gehäuseteil der Pelletpresse derart befestigbar ist, dass das Ablängmittel im radial äußeren Bereich einer drehbar gelagerten Ringmatrize der Pelletpresse, die radiale Durchgangsbohrungen aufweist, und zu dieser beabstandet angeordnet werden kann. Die zweite Ablängvorrichtung weist einen Grundkörper mit einer konkaven kreisbogenförmigen, Radialleitfläche auf, die als Ablängmittel ausgebildet ist.

Hierfür ist die Radialleitfläche mittels des Befestigungsbereiches in einem derartigen Abstand im radial äußeren Bereich der Ringmatrize anbringbar, dass ein Pellet, das über die Ringmatrize in deren Radialrichtung hinausragt und/oder im Bereich eines Kollers der Pelletpresse radial nach außen, insbesondere gegen die Radialleitfläche, gepresst wird, im Bereich seines freien Endes, insbesondere seiner Stirnseite, an der Radialleitfläche zum Anliegen kommt. Das Pellet vermag sich an dieser als Ablängmittel ausgebildeten Radialleitfläche in Umfangsrichtung derart entlang zu bewegen, dass das Pellet von der Radialleitfläche mittels einer im Wesentlichen in Umfangsrichtung der Ringmatrize wirkenden Reibkraft ausgelenkt wird, bis dieser im Bereich der Ringmatrize abknickt.

Das Pellet wird somit nicht abrupt abgebremst, sondern an seiner dem Ablängmittel zugewandten und in Radialrichtung zeigenden Stirnfläche über die Strecke eines definierten Winkelbereiches der Ringmatrize in Umfangsrichtung geführt. Hierbei wird das Pellet immer mehr aus seiner radialen Ausgangsstellung in Umfangsrichtung der Ringmatrize ausgelenkt, bis der Pellet im Bereich der Ringmatrize sanft abknickt bzw. von der Ringmatrize abgetrennt wird. Dies vermeidet ein undefiniertes Brechen oder Ablängen des Pellets in unterschiedlich lange Pelletstücke. Infolgedessen weisen die Pellets vorteilhafterweise eine durch den Abstand zwischen dem Außenumfang der Ringmatrize und der Innenkontur des Ablängmittels bzw. der dazu ausgebildeten Radialleitfläche bestimmte im Wesentlichen konstante Länge auf. Hierdurch kann der Anteil von unerwünschten "Kurzpellets" unter 14 mm von bisher durchschnittlich 60% auf unter 10% reduziert werden. Des Weiteren kann der beim Abtrennen entstehende Feinstaubanteil um bis zu 80% reduziert werden, wodurch die Produktionskosten gesenkt und der Durchsatz erhöht werden kann.

Die zweite Ablängvorrichtung, insbesondere die als Ablängmittel ausgebildete Radialleitfläche, ist zu der dafür vorgesehenen Ringmatrize vorzugsweise konzentrisch anordbar. Hierdurch kann der radiale Abstand zwischen der Ringmatrize und der Radialleitfläche über seine gesamte in Umfangsrichtung der Ringmatrize erstreckende Länge konstant gehalten werden. Wenn die Ablängvorrichtung in einem Winkelbereich der Ringmatrize angeordnet wird, in dem einer der Koller der Pelletpresse angeordnet ist, werden die Pellets im Bereich ihrer freien Enden stirnseitig aufgrund der kollerbedingten Längenvergrößerung gegen die Radialleitfläche gedrückt, so dass die Radialleitfläche in diesem Fall als Ablängmittel wirkt. Demnach wirkt auf das freie Ende des Pellets aufgrund der dadurch auftretenden Reibung zwischen Radialleitfläche und Pelletstirnseite eine im Wesentlichen in Umfangsrichtung wirkende Kraft ein, die den Pellet im Wesentlichen in Umfangsrichtung sanft umzuknicken vermag.

Alternativ kann diese vorteilhafterweise aber auch exzentrisch angeordnet sein, so dass sich der radiale Abstand zwischen Ringmatrize und Radialleitfläche in Umfangsrichtung verändert. Vorteilhafterweise kann die zweite Ablängvorrichtung somit derart positioniert werden, dass ein in Umfangsrichtung ankommendes Pellet im Bereich seines freien Endes an die Radialleitfläche anlauft und hierbei im Umfangsrichtung abgeknickt wird. Für bereits von der Ringmatrize abgetrennte Pellets als auch für Pellets, die im Bereich der Durchgangsbohrung der Ringmatrize gebrochen sind, wirkt die kreisbogenförmige Radialleitfläche ferner als radiales Führungsmittel. Infolgedessen fliegen durch das Ablängmittel abgetrennte und/oder insbesondere durch Vibrationen im Bereich der Durchgangsbohrung gebrochene Pellets nicht unkontrolliert radial nach außen, wo sie gegen scharfkantige Flächen der Pelletpresse prallen und in zumindest zwei undefiniert lange Bruchstücke zerbrechen könnten. Stattdessen werden diese Pellets durch die bogenförmige Radialleitfläche in einem definierten Abstand zum Außenumfang der Ringmatrize in Radialrichtung der Ringmatrize geführt.

Vorteilhaft ist es, wenn der radiale Abstand zwischen dem Außenumfang der Ringmatrize und der Radialleitfläche in Umfangsrichtung konstant ist. Alternativ ist es auch vorteilhaft, wenn sich dieser Abstand in Drehrichtung der Ringmatrize verringert, insbesondere von einem ersten Bereich bis zu einem zweiten Beriech der Radialleitfläche um weniger als 5 mm, vorzugsweise um weniger als 2 mm. Hierdurch wird ein sanftes Abknicken der Pellets begünstigt.

Vorteilhaft ist es ferner, wenn sich die Radialleitfläche in Axialrichtung der Ringmatrize über zumindest deren gesamte Breite erstreckt. Somit kann jede Durchgangsbohrungsreihe von der Radialleitfläche erfasst werden.

Vorteilhaft ist es, wenn die Radialleitfläche zumindest in einem Bereich, insbesondere im Bereich zumindest eines ihrer beiden in Umfangsrichtung zeigenden Enden, in Richtung zumindest einer ihrer beiden in Axialrichtung zeigenden Stirnseiten geneigt ist. Mittels dieses in Axialrichtung verlaufenden Gefälles der Radialleitfläche können abgetrennte Pellets schnell aus dem Abtrennbereich der Ablängvorrichtung abgeführt werden. Vorzugsweise ist die Radialleitfläche im Querschnitt, d.h. in Axialrichtung der Pelletpresse, zumindest in Richtung einer ihrer Stirnseiten hin schräg ausgebildet. Vorzugsweise ist sie zu beiden ihrer Stirnseiten hin schräg ausgebildet, so dass sie vorzugsweise im Wesentlichen satteldachförmig ausgebildet ist. Hierdurch können die Pellets in Richtung ihrer beiden Stirnseiten schnell abgeführt werden, so dass eine negative Beeinflussung des Ablängvorgangs durch die bereits abgelängten Pellets vermieden werden kann.

Vorteilhaft ist es, wenn die zweite Ablängvorrichtung gemäß der vorstehenden Beschreibung der ersten Ablängvorrichtung ausgebildet ist, wobei die genannten Merkmale einzeln oder beliebiger Kombination vorhanden sein können.

Vorteilhaft ist es, wenn die zweite Ablängvorrichtung als Ringsegment ausgebildet ist.

Erfindungsgemäß weist die Pelletpresse zum Pressen von biogenen faserhaltigen Pellets, insbesondere Holzpellets, eine rotierende Ringmatrize, einen Koller und eine Ablängvorrichtung auf. Die rotierbare Ringmatrize weist im Wesentlichen radiale Durchgangsbohrungen auf und bildet in ihrem Inneren einen Pressraum aus, in dem biogenes faserhaltiges Pressmaterial zuführbar ist. Der zumindest eine ortsfeste Koller ist zu der Ringmatrize exzentrisch angeordnet und vermag sich an deren Innenumfang derart abzurollen, dass das Pressmaterial zur Ausbildung der Pellets durch die Durchgangsbohrungen gepresst werden kann. Die Ablängvorrichtung weist zumindest ein Ablängmittel auf und ist an einem feststehenden Gehäuseteil der Pelletpresse derart befestigt, dass das Ablängmittel im radial äußeren Bereich der drehbar gelagerten Ringmatrize zu dieser beabstandet angeordnet ist. Hierdurch wird vorteilhafterweise ein Ringspalt zwischen dem Außenumfang der Ringmatrize und dem Innenumfang der Ablängvorrichtung ausgebildet. Erfindungsgemäß weist die Pelletpresse zumindest eine gemäß der vorstehenden Beschreibung ausgebildete erste Ablängvorrichtung und/oder eine gemäß der vorstehenden Beschreibung ausgebildete zweite Ablängvorrichtung auf.

Vorteilhaft ist es, wenn die erste und/oder zweite Ablängvorrichtung als Ringsegment ausgebildet ist. Somit kann die Ablängvorrichtung speziell für die im jeweiligen Winkelbereich vorliegenden Bedingungen angepasst sein. So bietet es sich insbesondere an, dass die erste Ablängvorrichtung in Umfangsrichtung der Ringmatrize im Bereich, insbesondere Winkelbereich, zwischen zwei benachbarten Kollern und/oder die zweite Ablängvorrichtung im Bereich, insbesondere Winkelbereich, des jeweiligen Kollers angeordnet ist.

Damit die abgetrennten Pellets nicht unkontrolliert im Inneren des Pressengehäuses herumfliegen, ist es vorteilhaft, wenn die Ablängvorrichtungen, insbesondere zumindest teilweise deren Radialleitflächen, einen geschlossenen Ring ausbilden. Hierfür sind sie vorteilhafterweise jeweils zu ihrer benachbarten Ablängvorrichtung unmittelbar angrenzend und/oder zumindest teilweise überlappend angeordnet.

Vorteilhaft ist es, wenn sich das Ablängmittel der ersten Ablängvorrichtung derart über den Bereich zumindest einer der Durchgangsbohrungen in Axial- und Umfangsrichtung der Ringmatrize erstreckt, dass ein Pellet, das über die Ringmatrize in deren Radialrichtung mit einer größeren Länge als der Abstand zwischen der Ringmatrize und dem Ablängmittel hinausragt, im Bereich seines freien Endes am Ablängmittel zum Anliegen kommt und sich an diesem in Umfangsrichtung derart entlang zu bewegen vermag, dass das Pellet vom Ablängmittel mittels einer eine Axialkomponente aufweisenden Kraft ausgelenkt wird, so dass es im Bereich der Ringmatrize abknickt. Das Pellet wird somit nicht abrupt abgebremst, sondern über die Strecke eines definierten Winkelbereiches der Ringmatrize, der insbesondere durch den Steigungswinkel des helixförmigen Ablängmittels beeinflussbar ist, in Umfangsrichtung geführt und hierbei zugleich immer mehr aus seiner radialen Ausgangsstellung ausgelenkt, bis der Pellet sanft abknickt bzw. von der Ringmatrize abgetrennt wird. Hierdurch wird ein undefiniertes Brechen oder Ablängen des Pellets in unterschiedlich lange Pelletstücke vermieden. Infolgedessen weisen die Pellets vorteilhafterweise eine durch den Abstand bestimmte im Wesentlichen konstante oder sich in einem Längenspektrum variierende Länge auf. So kann der Anteil von unerwünschten "Kurzpellets" unter 14 mm von bisher durchschnittlich 60% auf unter 10% reduziert werden. Des Weiteren kann der beim Abtrennen entstehende Feinstaubanteil um bis zu 80% reduziert werden, wodurch die Produktionskosten gesenkt und der Durchsatz erhöht werden kann.

Ferner werden die abgetrennten Pellets in Axialrichtung der Ringmatrize mittels des sich in Axialrichtung helixförmig erstreckenden Ablängmittels geführt. Hierdurch wird vermieden, dass die abgetrennten Pellets undefiniert an dafür nicht vorgesehene Bereiche der Pelletpresse geschleudert werden, wodurch diese beschädigt werden oder aber auch in zumindest zwei kürzere undefiniert lange Pelletstücke zerbrechen könnten. Das Ablängmittel ist demnach derart geformt, dass die Pellets sanft abgeknickt und zu einem Auswurfbereich der Pelletpresse in Axialrichtung geführt werden.

Vorteilhaft ist es, wenn der Abstand in Radialrichtung der Ringmatrize zwischen Ablängmittel und der dafür vorgesehenen Ringmatrize im Bereich zumindest einer der radialen Durchgangsbohrungen, bzw. über die zumindest zum Abknicken eines Pellets benötigte Länge L des Ablängmittels, im Wesentlichen konstant ist. Hierdurch kann sichergestellt werden, dass das abzuknickende Pellet, unmittelbar nachdem es in den Bereich des Ablängmittels gelangt, am Ablängmittel zum Anliegen kommt und über dessen gesamte Abknicklänge L von diesem geführt ist.

Wenn das Ablängmittel derart lang ausgebildet ist, dass es sich über den Bereich zumindest zweier radialer Durchgangsbohrungen bzw. zweier Bohrungsringe - die durch die in Umfangsrichtung hintereinander angeordneten Durchgangsbohrungen ausgebildet sind - erstreckt, ist es vorteilhaft, wenn der Abstand zwischen Ablängmittel und Ringmatrize über die gesamte Länge konstant ist. Somit weisen die im Bereich der ersten Durchgangsbohrung bzw. des ersten Bohrungsrings abgescherten Pellets die gleiche Länge auf wie die im Bereich der zweiten Durchgangsbohrung bzw. des zweiten Bohrungsrings abgescherten Pellets.

Alternativ oder zusätzlich kann die im Wesentlichen bogenförmige Kontur des Ablängmittels aber auch derart ausgebildet sein, dass der Abstand zwischen Ablängmittel und Ringmatrize variabel ausgebildet ist, so dass der Abstand zwischen Ablängmittel und Ringmatrize im Bereich eines ersten Bohrungsrings größer oder kleiner als der Abstand zwischen diesen beiden im Bereich eines zweiten Bohrungsrings ausgebildet ist. Vorzugsweise ist das Ablängmittel hierfür im Bereich der bogenförmigen Kontur gestuft und/oder von einem Ende des Ablängmittels bis zu seinem anderen Ende hin, insbesondere linear oder wellenförmig, abfallend oder ansteigend ausgebildet. Vorteilhafterweise werden die Pellets somit nicht alle in derselben Länge von der Ringmatrize abgetrennt, sondern innerhalb eines Längenspektrums, das durch die Ausgestaltung der bogenförmigen Kontur beeinflussbar ist. Demnach weisen die von dem Ablängmittel im Bereich des ersten Bohrungsrings abgetrennten Pellets im Vergleich zu denen im Bereich des zweiten Bohrungsrings abgetrennten Pellets eine zueinander unterschiedliche Länge auf.

Der Abstand zwischen Ringmatrize und Ablängmittel ist vorzugsweise im Wesentlichen konstant ausgebildet. Es ist aber ebenso denkbar, dass sich der Abstand in Umfangsrichtung verändert, insbesondere vergrößert oder verkleinert. Ferner kann das Ablängmittel in unterschiedlichen Bereichen mit unterschiedlich großen Abständen zur Ringmatrize ausgebildet sein. Hierdurch kann eine durch den Abstand des Ablängmittels bzw. des Ablängmittelbereiches zur Ringmatrize bestimmte Längenverteilung der von der Ringmatrize abgetrennten Pellets bewirkt werden. Demnach ist es für die Fließeigenschaft der Pellets vorteilhaft, wenn diese nicht alle die gleiche Länge aufweisen, sondern deren Länge im Bereich eines Längenspektrums ausgebildet ist.

Vorteilhaft ist es, wenn sich die als Ringsegment ausgebildete Ablängvorrichtung zwischen zwei benachbarten Kollern in Umfangsrichtung der Ringmatrize im Wesentlichen über einen Winkelbereich von 120° oder 180° erstreckt. Hierdurch können mehrere Ringsegmente bei insbesondere zwei oder drei Kollern derart im Bereich des äußeren Umfangs der Ringmatrize angeordnet werden, dass sich diese nicht in den Bereich der Koller erstrecken, in denen die Pellets durch das Hindurchpressen durch die Durchgangsbohrungen radial nach außen wachsen. Des Weiteren weisen die Ringsegmente somit in Umfangsrichtung der Ringmatrize eine ausreichend große Länge auf, um einen möglichst kleinen Steigungswinkel des helixförmig ausgebildeten Ablängmittels realisieren zu können.

Auch ist es vorteilhaft, wenn zumindest zwei als Ringsegment und/oder als geschlossener Ring ausgebildete Ablängvorrichtungen zueinander in Axial- und/oder Umfangsrichtung der Ringmatrize beabstandet oder benachbart angeordnet sind.

Vorteilhafterweise ist das Ablängmittel einer ersten Ablängvorrichtung als Absatz oder Rippe und das Ablängmittel einer zu dieser in Umfangsrichtung beabstandeten oder benachbarten zweiten Ablängvorrichtung als Nut ausgebildet. Somit werden zunächst die in Radialrichtung über die Ringmatrize hinausstehenden Pellets von der ersten Ablängvorrichtung abgeknickt, so dass sich diese von der Ringmatrize lösen. Aufgrund von Vibrationen kann es vorkommen, dass Pellets, die noch nicht die gewünschte Länge erreicht haben, in der Durchgangsbohrung brechen. Sobald diese brechen, werden sie aufgrund der Zentrifugalkraft radial nach außen getragen und kommen mit der Radialleitfläche in Kontakt, die diese in Radialrichtung führt. Wenn die gebrochenen Pellets in den Bereich des zweiten mit der Nut ausgebildeten Ablängvorrichtung kommen, dringen diese in die Nut ein und werden aufgrund ihrer helixförmigen Form derart axial ausgelenkt, dass sie in einer vordefinierten Länge im Bereich der Ringmatrize abknicken.

Vorteilhaft ist es, wenn die Ablängvorrichtung zur Ringmatrize in einem Abstand von 18-22 mm angeordnet ist. In Versuchen hat sich als sehr besonders gut geeignet ein Abstand von 18mm erwiesen, da sich hierbei eine Pelletlänge von etwa 22-26 mm ergibt, die im Wesentlichen der Ideallänge eines Pellets entspricht.

Vorteilhaft ist es, wenn die Anlagefläche im Bereich der Anlagekante abgeschrägt ist. Dadurch wird weitgehend vermieden, dass Pellets, welche beim Knicken über die hinten liegende Knickkante hochsteigen, mit Ihrem freien Ende anstehen.

Für die Tiefe der Nut haben sich Werte von 0,5 bis 1 x D (Durchmesser Pellet) als vorteilhaft erwiesen. Für die Nutbreite etwa 1,5 x D bis 3 x D.

Weitere Vorteile der Erfindung sind in den nachfolgenden Ausführungsbeispielen beschrieben. Es zeigt:
- **Figur 1**: eine schematische Darstellung einer Pelletpresse im Querschnitt,
- **Figur 2**: eine perspektivische Darstellung einer ersten Ablängvorrichtung mit einem als Rippe ausgebildeten Ablängmittel,
- **Figur 3**: eine perspektivische Darstellung einer ersten Ablängvorrichtung mit einem als Absatz ausgebildeten Ablängmittel,
- **Figur 4a-4c**: eine sequentielle Darstellung des Abknickvorgangs bei einem als Rippe ausgebildeten Ablängmittel einer ersten Ablängvorrichtung,
- **Figur 5**: eine perspektivische Darstellung einer alternativen Ausführungsform der ersten Ablängvorrichtung mit einem als Nut ausgebildeten Ablängmittel,
- **Figur 6a-6d**: eine sequentielle Darstellung des Abknickprozesses bei einem als Nut ausgebildeten Ablängmittel,
- **Figur 7**: eine perspektivische Darstellung eines weiteren Ausführungsbeispiels der ersten Ablängvorrichtung mit zwei zueinander Vförmig angeordneten Ablängmitteln,
- **Figur 8**: eine perspektivische Darstellung eines weiteren Ausführungsbeispiels der ersten Ablängvorrichtung mit zwei zueinander in Axialrichtung beabstandeten parallel verlaufenden Ablängmitteln,
- **Figur 9**: eine Detailansicht einer Pelletpresse im Bereich einer ersten und/oder zweiten Ablängvorrichtung,
- **Figur 10**: eine perspektivische Darstellung einer alternativen Ausführungsform einer ersten Ablängvorrichtung mit Ausführöffnung, Ausführkanal sowie einem als Absatz ausgebildeten Ablängmittel,
- **Figur 11**: eine alternative Ausführungsform der ersten Ablängvorrichtung im Querschnitt mit einem als Rippe ausgebildeten Ablängmittel und einer satteldachförmigen Radialleitfläche,
- **Figur 12**: eine in Umfangsrichtung der Ringmatrize im Bereich eines Kollers anzuordnende zweite Ablängvorrichtung mit einer als Ablängmittel ausgebildeten Radialleitfläche und
- **Figur 13**: eine alternative Ausführungsform der zweiten Ablängvorrichtung im Querschnitt mit einer satteldachförmigen und als Ablängmittel ausgebildeten Radialleitfläche.

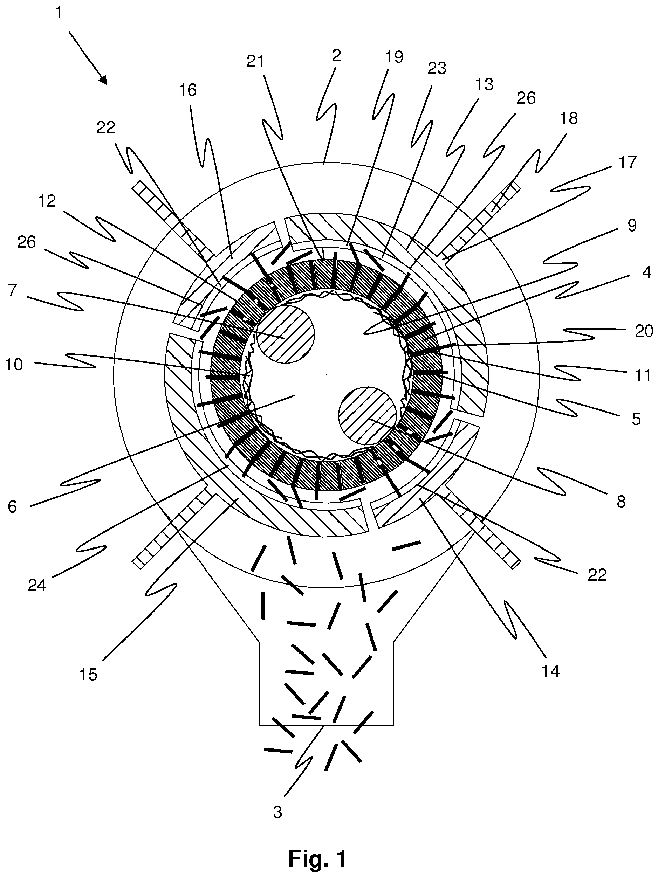

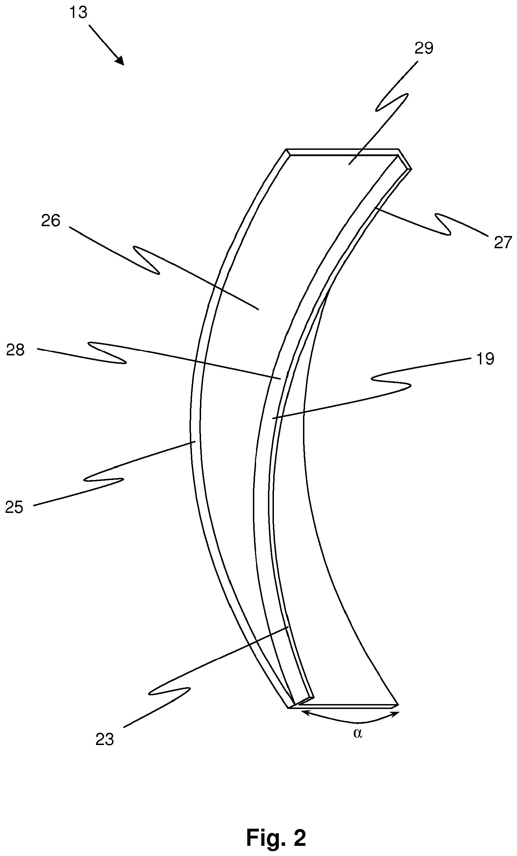

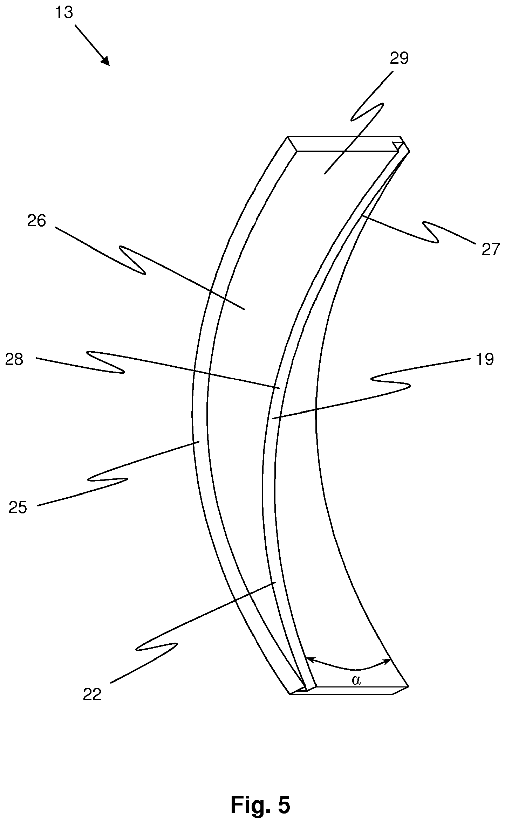

In der nachfolgenden Figurenbeschreibung werden zwei alternative Ablängvorrichtungen beschrieben, nämlich eine erste Ablängvorrichtung 13 und eine zweite Ablängvorrichtung 14. Diese können beide gleichzeitig bei einer Pelletpresse 1 zum Einsatz kommen, wobei sie zueinander in Umfangsrichtung der Pelletpresse 1 in unterschiedlichen Winkelbereichen angeordnet sind (vgl. Figur 1). Die erste Ablängvorrichtung 13 ist vorzugsweise im Bereich zwischen zwei Kollern 7, 8 angeordnet. Sie ist in unterschiedlichen Ausführungsvarianten in den Figuren 2, 3, 5, 7, 8, 10 und 11 dargestellt. Hierbei weist die Ablängvorrichtung 13 in allen Ausführungsbeispielen eine Radialleitfläche 26 auf, an deren konkaver Innenfläche ein Ablängmittel 19 angeordnet ist. Gemäß den Ausführungsbeispielen kann das Ablängmittel 19 in Radialrichtung über die Radialleitfläche 26, insbesondere als Absatz oder Rippe ausgebildet, hervorstehen (vgl. Figuren 2, 3, 7, 8, 10, 11) und/oder ist als Vertiefung, insbesondere als Nut und/oder Schlitz, in dieser ausgebildet (vgl. Figur 5).

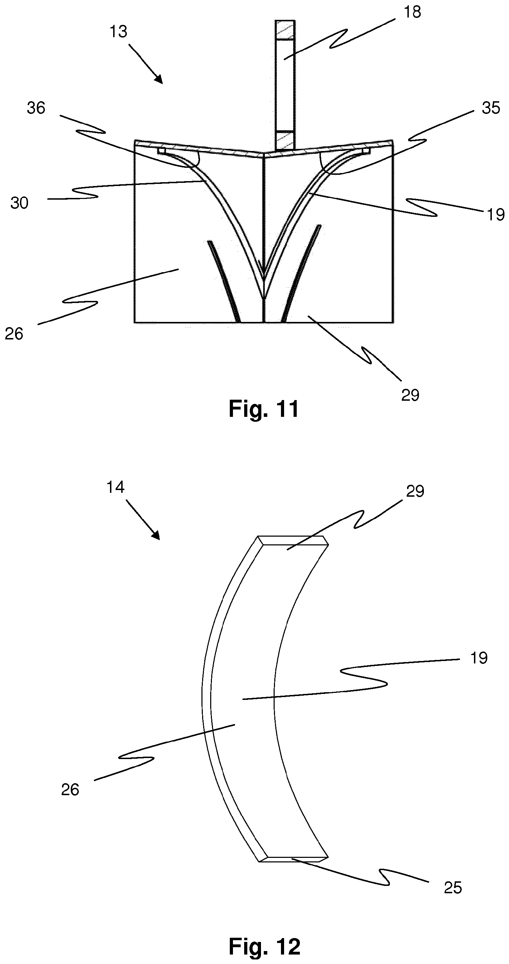

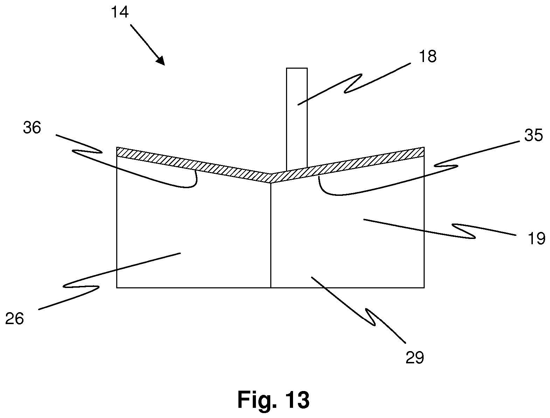

Im Gegensatz zur ersten Ablängvorrichtung 13 ist die zweite Ablängvorrichtung 14 vorzugsweise in Umfangsrichtung der Pelletpresse 1 im Bereich über einem der Koller 7, 8 angeordnet. Die zweite Ablängvorrichtung 14 weist genauso wie die erste Ablängvorrichtung 13 eine Radialleitfläche 26 auf. Diese ist jedoch als Ablängmittel 19 ausgebildet. Hierfür ist sie insbesondere im Bereich über einem Koller 7, 8 angeordnet. Das zweite Ablängmittel 14 ist in den Figuren 12 und 13 in unterschiedlichen Ausführungsbeispielen dargestellt. Hierin weist die Ablängvorrichtung 13 als Ablängmittel ausschließlich die dazu ausgebildete Radialleitfläche 26 auf. Diese kann als Variante satteldachförmig ausgebildet sein.

Figur 1 zeigt eine schematisch dargestellte Pelletpresse 1 im Querschnitt. Die Pelletpresse 1 weist ein im Wesentlichen rund ausgebildetes Gehäuseteil 2 auf, das feststehend ausgebildet ist und in seinem unteren Bereich eine Auswurföffnung 3 aufweist. Im Inneren des feststehenden Gehäuseteils 2 ist eine motorisch angetriebene drehbar gelagerte Ringmatrize 4 angeordnet. Die Ringmatrize 4 weist über ihren gesamten Umfang verteilt radiale Durchgangsbohrungen 5 auf, die sich von einem innerhalb der Ringmatrize 4 ausgebildeten Pressraum 6 radial nach außen erstrecken. Innerhalb des Pressraums 6 sind zwei voneinander beabstandete Koller 7, 8 angeordnet. Die beiden Koller 7, 8 sind zu der Ringmatrize 4 exzentrisch angeordnet und rollen sich am Innenumfang 9 der Ringmatrize 4 ab.

Durch eine hier nicht dargestellte Fördervorrichtung wird biogenes, faserhaltiges Pressmaterial 10 in den Pressraum 6 eingebracht. Das Pressmaterial 10 legt sich aufgrund der Zentrifugalkraft an den Innenumfang 9 der schnell rotierenden Ringmatrize 4 an. Im Bereich der beiden Koller 7, 8 wird das Pressmaterial 10 durch die Durchgangsbohrungen 5 der Ringmatrize 4 radial nach außen gepresst. Hierbei werden Pellets 11 ausgebildet, die sich im Wesentlichen über die gesamte Länge der Durchgangsbohrung 5 erstrecken und zum Teil über den Außenumfang 12 der Ringmatrize 4 radial überstehen. Zur Wahrung der Übersichtlichkeit ist nur eines der Pellets 11 mit einem Bezugszeichen versehen.

Im radial äußeren Bereich der Ringmatrize 4 sind zu dieser in Radialrichtung beabstandet vier Ablängvorrichtungen 13, 14, 15, 16 angeordnet. Die Ablängvorrichtungen 13, 14, 15, 16 weisen in ihrem radial äußeren Bereich jeweils einen Befestigungsbereich 17 auf, in dem eine Befestigungseinrichtung 18 ausgebildet ist, wobei zur Wahrung der Übersichtlichkeit auch hier nur eine der Ablängvorrichtungen 13, 14, 15, 16 mit Bezugszeichen versehen ist. Die Ablängvorrichtungen 13, 14, 15, 16 sind mit ihrer jeweiligen Befestigungseinrichtung 18 feststehend mit dem Gehäuseteil 2 verbunden. Die Befestigungseinrichtung 18 umfasst eine hier nicht dargestellte Verstelleinrichtung, mittels derer die Ablängvorrichtungen 13, 14, 15, 16 jeweils in Radialrichtung, vorzugsweise stufenlos, verstellt bzw. verschoben werden können. Anhand der Verstelleinrichtung kann somit der Abstand zwischen dem Außenumfang 12 der Ringmatrize 4 und der jeweiligen Ablängvorrichtung 13, 14, 15, 16 eingestellt werden. Anhand des Abstands zwischen Ringmatrize 4 und der jeweiligen Ablängvorrichtung 13, 14, 15, 16 kann die Länge der in dem jeweiligen Bereich abzutrennenden Pellets 11 eingestellt werden. Die Ablängvorrichtungen 13, 14, 15, 16 weisen jeweils eine Radialleitfläche 26 zum radialen Führen der Pellets 11 auf. Die Abstände der Radialleitflächen 26 der vier Ablängvorrichtungen 13, 14, 15, 16 zum Außenumfang 12 der Ringmatrize 4 sind im vorliegenden Ausführungsbeispiel im Wesentlichen gleich und/oder konstant ausgebildet. Zusammen bilden die Radialleitflächen 26 somit eine umlaufende, insbesondere im Wesentlichen geschlossene, Radialleitfläche aus. Die Ablängvorrichtungen 13, 14, 15, 16 weisen vorzugsweise zueinander einen geringen Abstand von vorzugsweise weniger als 60 mm auf. Hierdurch kann vermieden werden, dass diese beim Verstellen in Radialrichtung aneinander stoßen und sich gegenseitig blockieren. Alternativ können diese aber auch unmittelbar aneinander angrenzen oder sich in ihren Endberiechen teilweise überlappen. Auch ist es denkbar, dass die Ablängvorrichtungen 13, 14, 15, 16 in zueinander unterschiedlichen Abständen von der Ringmatrize 4 angeordnet sind.

Die Ablängvorrichtungen 13, 14, 15, 16 weisen in ihrem radial inneren Bereich ein Ablängmittel 19 mit einer konkav bogenförmigen Kontur 21 auf. Die Ablängmittel 19 sind, wie später detailliert ausgeführt, als erstes Ablängmittel ausgebildet, so dass sie sich im Wesentlichen in Axialrichtung der Ringmatrize 4 helixförmig erstrecken.

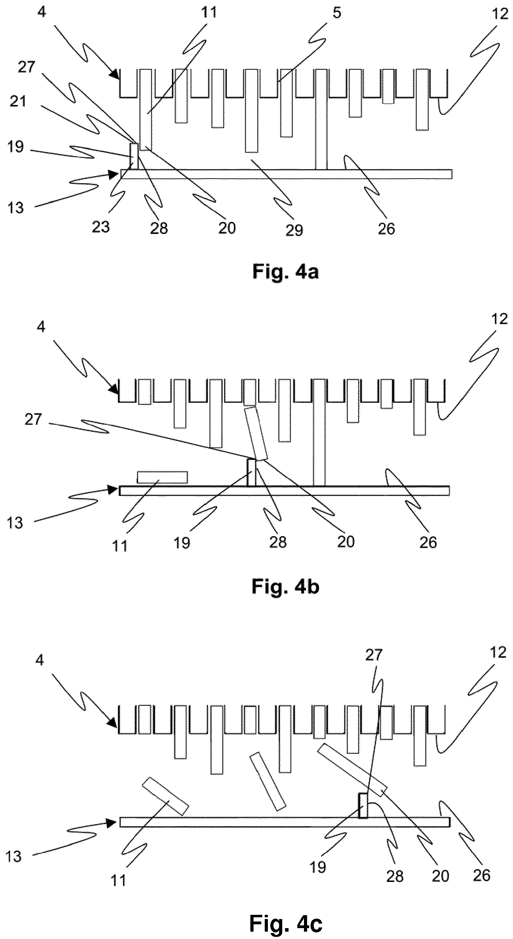

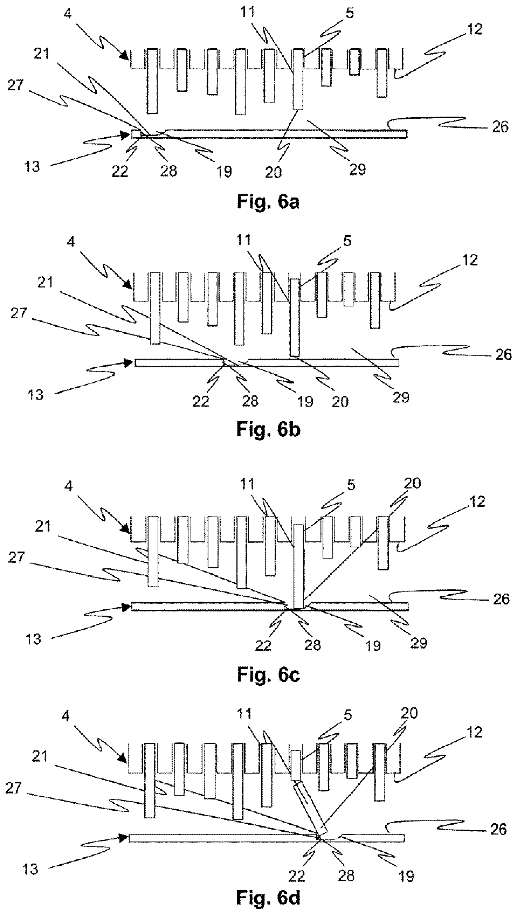

Ein von den beiden Kollern 7, 8 radial durch eine der Durchgangsbohrungen 5 gepresster Pellet 11 kommt demnach mit einer der ersten Ablängvorrichtungen 13, 14, 15, 16 in Kontakt, wenn dieser in Radialrichtung weiter übersteht als der eingestellte Abstand zwischen dem Außenumfang 12 der Ringmatrize 4 und dem dazu beabstandet angeordneten Ablängmittel 19. Der Pellet 11 kommt beim weiteren Rotieren der Ringmatrize 4 im Bereich seines freien Endes 20 am helixförmig ausgebildeten Ablängmittel 19, insbesondere im Bereich seiner im Wesentlichen zylindrischen Seitenfläche, zum Anliegen und bewegt sich an diesem in Umfangsrichtung der Ringmatrize 4 über ein definiertes Winkelintervall entlang. Aufgrund der sich in Axialrichtung der Ringmatrize 4 helixförmig erstreckenden Ablängmittel 19 wird der Pellet 11 im Bereich seines freien Endes 20 im Wesentlichen in Axialrichtung der Ringmatrize 4 ausgelenkt. Die vom Ablängmittel 19 im Wesentlichen eine Axialkomponente aufweisende Kraft bewirkt, dass der Pellet 11 im Bereich des Außenumfangs 12 der Ringmatrize 4 in einer definierten Länge abknickt (vgl. Figuren 4a-4c und Figuren 6a-6d). Dieser Abknickprozess ist sehr schonend, so dass die mit dieser Vorrichtung hergestellten Pellets 11 eine im Wesentlichen konstante Länge aufweisen.

Die Ablängvorrichtungen 13, 14, 15, 16 sind vorliegend als Ringsegmente ausgebildet. Sie sind über den Umfang der Ringmatrize 4 in unterschiedlichen Winkelintervallen verteilt angeordnet. Zwei zueinander benachbart angeordnete Ablängvorrichtungen 13, 14, 15, 16 weisen jeweils in Umfangsrichtung einen Abstand zueinander auf. In einem alternativen Ausführungsbeispiel können diese aber auch unmittelbar aneinander angrenzen, so dass ein mehrteiliges umfangsmäßig geschlossenes Ringsegment ausgebildet ist, das die erste, zweite, dritte und vierte Ablängvorrichtung 13, 14, 15, 16 umfasst.

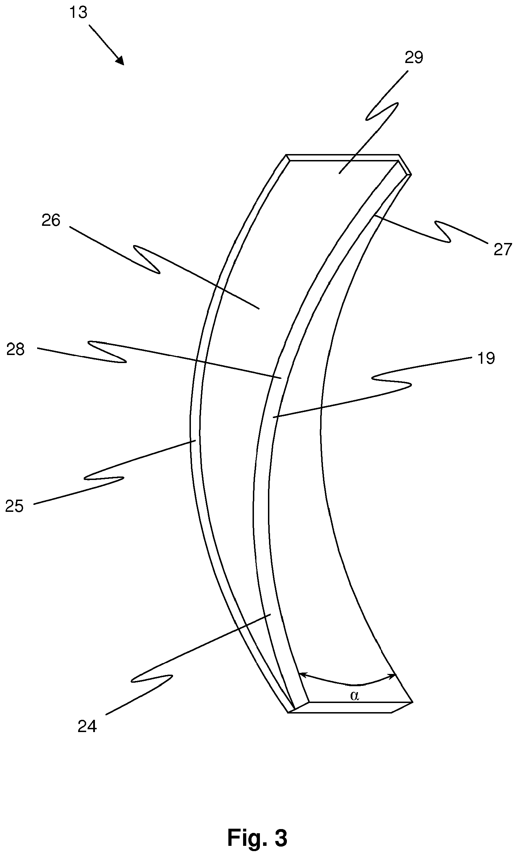

In dem in Figur 1 dargestellten Ausführungsbeispiel weisen die im Bereich der beiden Koller 7, 8 angeordneten Ablängvorrichtungen 14, 16 ein als Nut 22 ausgebildetes Ablängmittel 19 auf (vgl. Figur 5). Die zu den Kollern 7, 8 in Umfangsrichtung benachbart bzw. beabstandet angeordneten Ablängvorrichtungen 13, 15 weisen im Gegensatz dazu ein als Rippe 23 und/oder Absatz 24 ausgebildetes Ablängmittel 19 auf (vgl. Figuren 2 und 3). Die beiden im Bereich der Koller 7, 8 angeordneten Ablängvorrichtungen 14, 16 weisen im Vergleich zu den beiden anderen Ablängvorrichtungen 13, 15 einen größeren Abstand zum Außenumfang 12 der Ringmatrize 4 auf. Somit werden die im Bereich der Koller 7, 8 radial nach außen wachsenden Pellets 11 durch die zweite und vierte Ablängvorrichtung 14, 16 nicht an ihrem Längenwachstum gehindert. Wenn sie die entsprechend eingestellte Länge erreicht haben, werden diese im Bereich der ersten und/oder dritten Ablängvorrichtung 13, 15 durch das jeweils helixförmig ausgebildete Ablängmittel 19 definiert abgeknickt.

Die zweite und vierte mit einer Nut 22 ausgebildete Ablängvorrichtung 14, 16 dienen im Gegensatz dazu im Wesentlichen dafür, in der Durchgangsbohrung 5 gebrochene Pellets 11 in einer definierten Länge von der Ringmatrize 4 abzutrennen. So werden diese gebrochenen Pellets 11 aufgrund der Zentrifugalkraft radial nach außen gegen die zweite und vierte Ablängvorrichtung 14, 16 gedrückt, wobei sie in die Nut 22 eingreifen und im Wesentlichen in Axialrichtung abgeknickt werden.

Alternativ können die beiden im Bereich der Koller 7, 8 angeordneten Ablängvorrichtungen 14, 16 aber auch ohne diese Nut 22 ausgebildet sein. In diesem Fall umfassen diese Ablängvorrichtungen 14, 16 im Wesentlichen nur die Radialleitfläche 26 zum Führen und Ablängen der Pellets 11. Demnach ist die konkave und/oder bogenförmige, insbesondere kreisbogenförmige, Radialleitfläche 26 als Ablängmittel 19 ausgebildet. Hierfür ist die Radialleitfläche 26 zu der dafür vorgesehenen Ringmatrize 4 konzentrisch angeordnet, so dass der radiale Abstand zwischen der Ringmatrize 4 und der Radialleitfläche 26 über seine gesamte in Umfangsrichtung der Ringmatrize 4 erstreckende Länge konstant ist. Um als Ablängmittel 19 zu wirken ist die Radialleitfläche 26 ferner mittels des Befestigungsbereiches 17 in einem derartigen Abstand im radial äußeren Bereich der Ringmatrize 4 angebracht, dass ein Pellet 11, das über die Ringmatrize 4 in deren Radialrichtung hinausragt und im Bereich eines Kollers 7, 8 der Pelletpresse 1 radial nach außen gegen die Radialleitfläche 26 gepresst wird, im Bereich seines freien Endes mit seiner Stirnseite an der Radialleitfläche 26 zum Anliegen kommt. Das Pellet 11 bewegt sich bei Rotation der Ringmatrize 4 an dieser als Ablängmittel 19 ausgebildeten Radialleitfläche 26 in Umfangsrichtung derart entlang, dass das Pellet 11 von der Radialleitfläche 26 mittels einer im Wesentlichen in Umfangsrichtung der Ringmatrize 4 wirkenden Reibkraft ausgelenkt wird, bis dieser im Bereich der Ringmatrize 4 abknickt. Das Pellet wird somit nicht abrupt abgebremst, sondern schonen von der Ringmatrize 4 getrennt. Hierdurch wird ein undefiniertes Brechen oder Ablängen der Pellets 11 in unterschiedlich lange Pelletstücke vermieden.

Alternativ kann die Radialleifläche 26 aber auch exzentrisch angeordnet sein, so dass sich der radiale Abstand zwischen Ringmatrize 4 und Radialleitfläche 26 in Umfangsrichtung verändert, insbesondere in Drehrichtung der Ringmatrize 4 verringert. Hierdurch läuft ein in Umfangsrichtung ankommendes Pellet 11 im Bereich seines freien Endes stetig auf die Radialleitfläche 26 auf, wodurch es in Umfangsrichtung abgeknickt wird. Diese alternative Ausführungsform könnte beispielsweise auch im Winkelbereich zwischen den beiden Kollern 7, 8 eingesetzt werden.

Die vorliegende Erfindung ist nicht auf die in Figur 1 exemplarisch dargestellte räumliche Anordnung der vier Ablängvorrichtungen 13, 14, 15, 16 sowie deren jeweilige Ausbildung, insbesondere des jeweiligen Ablängmittels 19, beschränkt. So kann insbesondere die Anzahl der in Umfangsrichtung von der Ringmatrize 4 beabstandeten Ablängvorrichtungen 13, 14, 15, 16 sowie der von diesen umgriffene Winkelbereich beliebig variieren. Ferner können die Ablängmittel 19 der jeweiligen Ablängvorrichtungen 13, 14, 15, 16 gemäß der nachfolgenden Beschreibung unterschiedlich ausgebildet sein. Demnach können die Ablängvorrichtungen 13, 14, 15, 16 gemäß dem vorstehend beschriebenen Ausführungsbeispiel als erste Ablängvorrichtungen ausgebildet sein (vgl. Figur 2, 3, 5, 7, 8, 10 und 11). Alternativ können alle oder auch nur einige der Ablängvorrichtungen 13, 14, 15, 16 als zweite Ablängvorrichtungen ausgebildet sein, die dann im Wesentlichen nur eine als Ablängmittel ausgebildete Radialleitfläche aufweisen (vgl. Figur 12 und13). In einer bevorzugten Ausführungsform sind jeweils die im Bereich der Koller 7, 8 angeordneten Ablängvorrichtungen 14, 16 der Figur 1 als erste Ablängmittel ausgebildet. Hierfür ist die Radialleitfläche 26 mittels des Befestigungsbereiches 17 in einem derartigen Abstand im radial äußeren Bereich der Ringmatrize 4 anbringbar, dass ein Pellet 11, das über die Ringmatrize 4 in Radialrichtung hinausragt und/oder im Bereich eines Kollers 7, 8 der Pelletpresse 1 radial nach außen, insbesondere gegen die Radialleitfläche 26, gepresst wird, im Bereich seines freien Endes, insbesondere seiner Stirnseite, an der Radialleitfläche 26 zum Anliegen kommt. Das Pellet 11 vermag sich an dieser als Ablängmittel 19 ausgebildeten Radialleitfläche 26 in Umfangsrichtung derart entlang zu bewegen, dass das Pellet 11 von der Radialleitfläche 26 mittels einer im Wesentlichen in Umfangsrichtung der Ringmatrize 4 wirkenden Reibkraft ausgelenkt wird, bis dieser im Bereich der Ringmatrize 4 abknickt. Das Pellet 11 wird somit nicht abrupt abgebremst, sondern an seiner dem Ablängmittel 19 zugewandten und in Radialrichtung zeigenden Stirnfläche über die Strecke eines definierten Winkelbereiches der Ringmatrize 4 in Umfangsrichtung geführt. Hierbei wird das Pellet 11 immer mehr aus seiner radialen Ausgangsstellung in Umfangsrichtung der Ringmatrize 4 ausgelenkt, bis der Pellet 11 im Bereich der Ringmatrize 4 sanft abknickt bzw. von der Ringmatrize 4 abgetrennt wird.

Figur 2 zeigt ein erstes Ausführungsbeispiel der Ablängvorrichtung 13 mit einem Grundkörper 25, der an seiner der Ringmatrize 4 zugewandten Seite eine konkave kreisbogenförmige Radialleitfläche 26 aufweist. Im Bereich der Radialleitfläche 26 ist das Ablängmittel 19 ausgebildet. Das Ablängmittel 19 ist helixförmig ausgebildet. Es erstreckt sich demnach als Teil einer Schraubfläche in Axialrichtung der hier nicht dargestellten Ringmatrize 4 (vgl. Figur 1) bzw. im Wesentlichen helixförmig über zumindest einen Bereich der kreisbogenförmigen Radialleitfläche 26. Das Ablängmittel 19 weist einen Steigungswinkel α auf.

Das Ablängmittel 19 der Ablängvorrichtung 13 ist als Rippe 23 ausgebildet. Die Rippe 23 erhebt sich von der Radialleitfläche 26 ausgehend radial nach innen in Richtung der dafür vorgesehenen Ringmatrize 4 (vgl. Figur 1). Das als Rippe 23 ausgebildete Ablängmittel 19 umfasst eine sich im Wesentlichen über seine gesamte Länge erstreckende Anlagekante 27 sowie Anlagefläche 28.

Die vorliegend als Ringsegment ausgebildete Ablängvorrichtung 13 weist im Bereich eines ihrer beiden Enden eine Zuführöffnung 29 auf, von deren Seite die hier nicht dargestellten Pellets 11 in den Bereich der Ablängvorrichtung 13 eintreten. Während ihres weiteren Fortbewegens in Umfangsrichtung der Ablängvorrichtung 13 gleiten die Pellets 11 an der Anlagefläche 28 und/oder der Anlagekante 27 anliegend entlang, wobei sie hierbei aufgrund der helixförmigen Ausbildung der Anlagekante 27 bzw. Anlagefläche 28 des Ablängmittels 19 in Axialrichtung derart ausgelenkt werden, dass sie im Bereich der Ringmatrize 4 abknicken.

Das in Figur 2 dargestellte erste Ausführungsbeispiel der Ablängvorrichtung 13 hat den Vorteil, dass es aufgrund der Rippe 23 nur eine geringe Fläche aufweist, die über die Radialleitfläche 26 hervorsteht. Demnach eignet sich dieses Ausführungsbeispiel sehr gut, um im Bereich der Koller 7, 8 angeordnet zu werden (vgl. Figur 1), da hierdurch nur ein verschwindend geringer Anteil der Pellets 11 an ihrem Radialwachstum gehindert werden.

In den Figuren 3, 5, 7 und 8 sind weitere Ausführungsformen der Ablängvorrichtung 13 gezeigt, wobei für gleiche Merkmale gleiche Bezugszeichen verwendet werden. Sofern diese nicht nochmals detailliert erläutert werden, entspricht deren Ausgestaltung und Wirkweise den vorstehend bereits beschriebenen Merkmalen.

So zeigt Figur 3 ein alternatives zweites Ausführungsbeispiel der Ablängvorrichtung 13 bei dem das Ablängmittel 19 als Absatz 24 ausgebildet ist. Die Ablängvorrichtung 13 ist somit sehr robust ausgebildet, so dass sich die Anlagefläche 28 gegenüber der Radialleitfläche 26 nicht zu verbiegen vermag.

Die Figuren 4a bis 4c veranschaulichen in einer sequenziellen Darstellung die Wirkweise des in Figur 2 als Rippe 23 ausgebildeten Ablängmittels 19. Die Funktionsweise des in Figur 3 dargestellten zweiten alternativen Ausführungsbeispiels, bei dem das Ablängmittel 19 als Absatz 24 ausgebildet ist, ist zu diesem identisch.

So sind die Pellets 11 gemäß Figur 4a mittels der hier nicht dargestellten Koller 7, 8 durch die Durchgangsbohrungen 5 radial nach außen gepresst, so dass diese unterschiedlich lang über den Außenumfang 12 der Ringmatrize 4 hervorstehen. Die Pellets 11 sollen jedoch erst ab einer vorbestimmten Länge von der Ringmatrize 4 abgetrennt werden. Diese Länge ist durch den Abstand zwischen dem Außenumfang 12 der Ringmatrize 4 und der bogenförmigen Kontur 21 des Ablängmittels 19 bestimmt. So gelangen die Pellets 11 im Bereich der Zuführöffnung 29 beim weiteren Rotieren der Ringmatrize 4 gegenüber der Ablängvorrichtung 13 in den Bereich des Ablängmittels 19. Wenn die Pellets 11 über die Ringmatrize 4 in deren Radialrichtung mit einer größeren Länge als der Abstand zwischen Ringmatrize 4 und Ablängmittel 19 hinausragen, kommen diese im Bereich ihrer freien Enden 20 an der Anlagekante 27 und/oder der Anlagefläche 28 des Ablängmittels 19 zum Anliegen.

Die Pellets 11 bewegen sich beim weiteren Rotieren der Ringmatrize 4 an dem Ablängmittel 19 anliegend an diesem entlang. Aufgrund der helixförmigen Ausgestaltung des Ablängmittels 19 bewegt sich dieses in Axialrichtung der Ringmatrize 4 in einem konstanten Abstand zu dieser von einer ihrer beiden Stirnseiten zu der anderen (vgl. Figuren 4a-4c). Die eine bestimmte Mindestlänge aufweisenden Pellets 11 werden hierbei mittels des Ablängmittels 19 durch eine von dieser im Wesentlichen in Axialrichtung eingeleiteten Kraft derart stark ausgelenkt, dass sie im Bereich des Außenumfangs 12 der Ringmatrize 4 abgeknickt werden (vgl. Figur 4b).

Sobald die Pellets 11 gemäß Figur 4b von der Ringmatrize 4 abgetrennt sind, werden diese von der Radialleitfläche 26 in Radialrichtung geführt. Hierdurch wird vermieden, dass die abgetrennten Pellets 11 mit hoher Geschwindigkeit an das feststehende Gehäuseteil 2 der Pelletpresse 1 geschleudert werden, wodurch sie in weitere kleinere Stücke zerbrechen könnten (vgl. Figur 1).

In einem in Figur 5 dargestellten dritten Ausführungsbeispiel der Ablängvorrichtung 13 ist das Ablängmittel 19 als Nut 22 ausgebildet. Anhand des in den Figuren 6a-6d dargestellten sequenziellen Abknickprozesses ist zu erkennen, dass das als Nut 22 ausgebildete Ablängmittel 19 dafür ausgebildet ist, um insbesondere bereits in der Durchgangsbohrung 5 gebrochene Pellets 11 in einer definierten Länge von der Ringmatrize 4 abzutrennen.

So liegt gemäß Figur 6a zunächst keines der Pellets 11 im Bereich seines freien Endes 20 an der Radialleitfläche 26 an. Aufgrund von Vibrationen kann es jedoch vorkommen, dass vereinzelte Pellets 11 im Bereich der Durchgangsbohrung 5 brechen und aufgrund der Zentrifugalkraft radial nach außen bewegt werden. In diesem Fall werden sie gemäß Figur 6b mittels der Radialleitfläche 26 an einem unkontrollierten radialen Herausschleudern gehindert. So legen sich diese gebrochenen Pellets 11 im Bereich ihres freien Endes 20 an die Radialleitfläche 26 an, die diese dann in Radialrichtung führt.

Durch die helixförmige Ausgestaltung des als Nut 22 ausgebildeten Ablängmittels 19 bewegt sich die Nut beim weiteren Rotieren der Ringmatrize 4 in Axialrichtung in Richtung des Pellets 11. Sobald das Ablängmittel 19 gemäß Figur 6c in den Bereich des an der Radialleitfläche 26 anliegenden Pellets 11 kommt, dringt das Pellet 11 aufgrund der Zentrifugalkraft in die Nut 22 ein. Hierbei kommt das Pellet 11 im Bereich seines freien Endes 20 mit der Anlagekante 27 und/oder der Anlagefläche 28 in Kontakt und bewegt sich an dieser in Umfangsrichtung zumindest teilweise entlang.

Das Ablängmittel 19 wirkt mit seiner Anlagekante 27 und/oder Anlagefläche 28 auf das Pellet 11 im Bereich seines freien Endes 20 eine Axialkomponente aufweisende Kraft aus. Hierdurch wird das Pellet 11 gemäß Figur 6d soweit ausgelenkt, bis es im Bereich des Außenumfangs 12 der Ringmatrize 4 abknickt und sich von dieser löst. Das abgetrennte Pellet 11 legt sich nach dem Abtrennen mit seiner Längsseite an die Radialleitfläche 26 an. Die Radialleitfläche 26 verhindert somit, dass das abgetrennte Pellet 11 unkontrolliert mit hoher Wucht gegen Gehäuseteile der Pelletpresse 1 geschleudert wird, wodurch das Pellet 11 in kleinere Teile zerbrechen könnte.

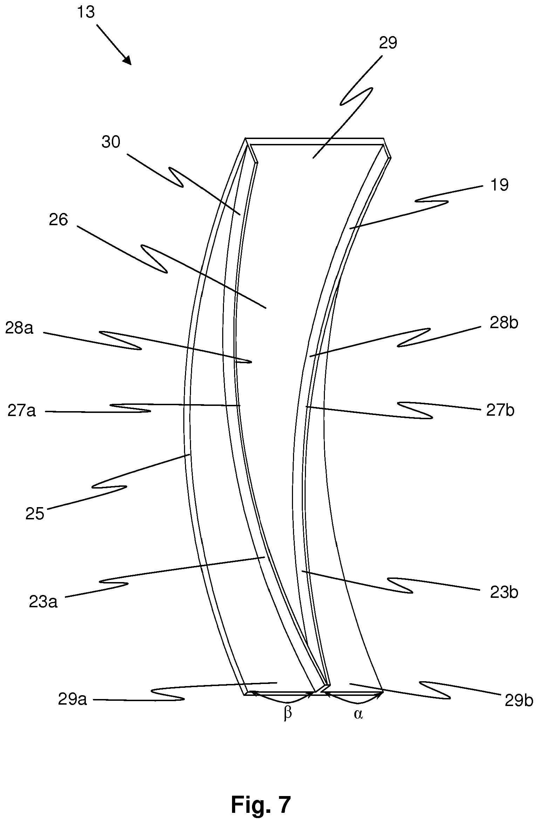

Figur 7 zeigt ein weiteres Ausführungsbeispiel der Ablängvorrichtung 13 die ein erstes und zweites Ablängmittel 19, 30 aufweist. Die beiden Ablängmittel 19, 30 sind vorliegend als Rippen 23a, 23b ausgebildet. Ferner sind diese zueinander derart angeordnet, dass sie in Drehrichtung der Ringmatrize 4 eine zusammenlaufende V-Form ausbilden. Die beiden Ablängmittel 19, 30 sind demnach zueinander spiegelverkehrt angeordnet, wobei das erste Ablängmittel 19 einen positiven Steigungswinkel α und das zweite Ablängmittel 30 einen negativen Steigungswinkel β aufweist. Die hier nicht dargestellten Pellets 11 gelangen über die gemeinsame Zuführöffnung 29 in den Bereich der beiden Ablängmittel 19, 30.

Die Ablängvorrichtung 13 kann gegenüber der Ringmatrize 4 auch derart angeordnet sein, dass die beiden Ablängmittel 19, 30 eine auseinander laufende V-Form ausbilden. Demnach würden die Pellets über eine erste Zuführöffnung 29a in den Bereich des zweiten Ablängmittels 30 und über eine zweite Zuführöffnung 29b in den Bereich des ersten Ablängmittels 19 gelangen.

Die Steigungswinkel können in einem hier nicht dargestellten Ausführungsbeispiel auch unterschiedlich groß ausgebildet sein, so dass eine schräggestellte V-Form ausbildet ist.

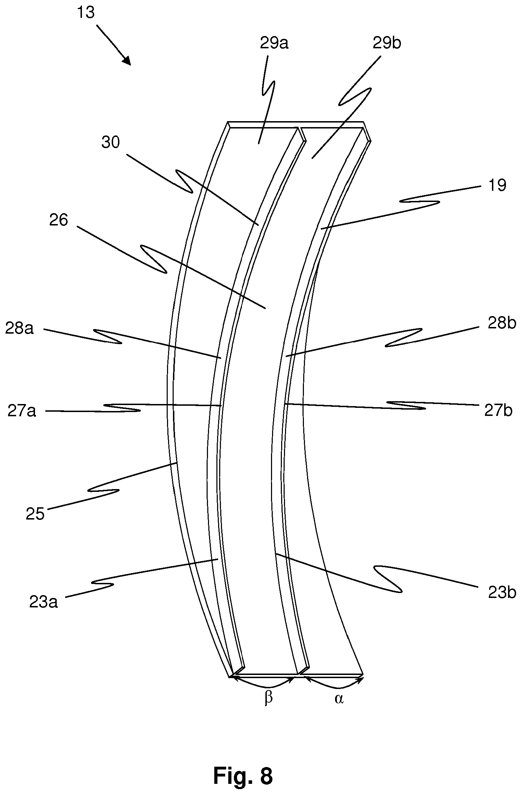

In einem in Figur 8 dargestellten weiteren Ausführungsbeispiel der Ablängvorrichtung 13 weisen die beiden Ablängmittel 19, 30 in Axialrichtung der Ringmatrize 4 zueinander einen konstanten Abstand auf. Die beiden Steigungswinkel α, β der beiden Ablängmittel 19, 30 sind demnach beide positiv oder negativ ausgebildet. Die hier nicht dargestellten Pellets 11 gelangen über die beiden Zuführöffnungen 29a, 29b zu dem jeweiligen Ablängmittel 19, 30. Die beiden Ablängmittel 19, 30 teilen somit die über die Ringmatrize 4 radial hinausstehenden Pellets 11 in Axialrichtung in zwei Bereiche auf. Vorteilhafterweise kann somit der Steigungswinkel α, β der beiden Ablängmittel 19, 30 im Vergleich zu dem in Figur 2 dargestellten Ausführungsbeispiel der Ablängvorrichtung 13 flacher ausgebildet werden. Durch den flachen Steigungswinkel α, β wird es möglich, die Pellets ohne die bisher auftretenden hohen Beschleunigungen schonend und wesentlich langsamer abzuknicken.

Die in den Figuren 2, 3, 5, 7 und 8 dargestellten Ausführungsbeispiele der Ablängvorrichtung 13 können sich alternativ auch über den gesamten Umfang der Ringmatrize 4 erstreckt. Demnach wäre die Ablängvorrichtung 13 als geschlossener Kreis ausgebildet. Des Weiteren können natürlich auch mehrere Ablängvorrichtungen in Axialrichtung der Ringmatrize 4 zueinander benachbart oder beabstandet in der Pelletpresse 1 angeordnet sein. Auch ist eine beliebige Kombination von als Nuten 22, Rippen 23 und/oder Absätze 24 ausgebildeten Ablängmitteln 19 denkbar. Des Weiteren ist das jeweilige Ende der Ablängvorrichtung im Bereich der Zuführöffnung 29, von deren Seite die abzutrennenden Pellets herangeführt werden, sehr dünn auszubilden, damit verhindert wird, dass die Pellets 11 gegen das Ende des Ablängmittels 19 anlaufen und abrupt abgebremst werden. Dies kann zusätzlich oder alternativ durch eine axiale Positionierung der Enden außerhalb des Bereiches der Ringmatrize 4 bewirkt werden.

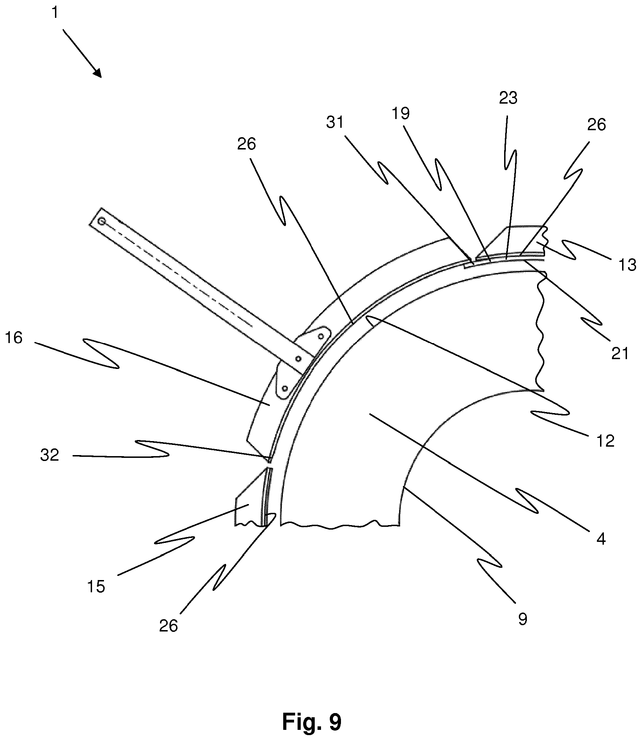

Figur 9 zeigt eine Detailansicht der Pelletpresse 1 aus Figur 1 im Bereich der vierten Ablängvorrichtung 16. Wie bereits bei der Beschreibung von Figur 1 erwähnt, weisen die Ablängvorrichtungen 13, 14, 15, 16 zueinander einen geringen Abstand von vorzugsweise 10 mm auf. Hierdurch kann vorteilhafterweise vermieden werden, dass diese beim Verstellen in Radialrichtung aneinander stoßen und sich gegenseitig blockieren. Nachteilig hierbei ist, dass aufgrund von Fertigungstolleranzen und/oder einer ungenauen Einstellung der radialen Abstände, Pellets 11 an ein in Radialrichtung höhergelegenes Ende eines der Ablängvorrichtungen 13, 14, 15, 16 prallen, wodurch diese abrupt abgebremst werden würden. Um dies zu vermeiden, weist zumindest eine der Ablängvorrichtungen 13, 14, 15, 16 benachbart zu den Radialleitflächen 26 eine Eintrittsfläche 32 auf. Die Eintrittsfläche 32 ist im vorliegenden Ausführungsbeispiel an dem entgegen die Umlaufrichtung der Pellets 11 zeigenden Ende der Radialleitfläche 26 der vierten Ablängvorrichtung 16 angeordnet.

Demnach wird beispielsweise ein im Bereich der dritten Ablängvorrichtung 15 in der hier nicht dargestellten Durchgangsbohrung 5 der Ringmatrize 4 gebrochener Pellet 11 durch die Zentrifugalkraft mit seinem freien Ende 20 gegen die Radialleitfläche 26 der dritten Ablängvorrichtung 15 gepresst und von dieser radial geführt. Sobald der Pellet 11 in den Bereich der vierten Ablängvorrichtung 16 gelangt, kann sich dieser aufgrund der abgeschrägten Eintrittsfläche 32 etwas radial nach außen bewegen. Hierdurch wird vermieden, dass der Pellet 11 gegen das Ende der vierten Ablängvorrichtung 16 prallt und schlagartig abgebremst wird. Die Eintrittsfläche 32 führt den Pellet 11 anschließend zu der Radialleitfläche 26, die den Pellet 11 weiter in Umfangsrichtung führt.

In der Detailansicht von Figur 9 ist zu erkennen, dass sich das Ablängmittel 19 bzw. die Rippe 23 der ersten Ablängvorrichtung 13 in Umfangsrichtung in den Bereich der dazu benachbart angeordneten vierten Ablängvorrichtung 16 erstreckt. Der überstehende Bereich des Ablängmittels 19 bildet somit für die vierte Ablängvorrichtung 16 einen radialen Anschlag 31 aus. Wenn der Abstand der ersten Ablängvorrichtung 13 zur Ringmatrize 4 eingestellt ist, kann die vierte Ablängvorrichtung 16 derart weit radial nach innen verschoben werden, bis deren Radialleitfläche 26 an den Anschlag 31 der ersten Ablängvorrichtung 13 stößt. Die Radialleitflächen 26 der beiden Ablängvorrichtungen 13, 16 weisen dann gegenüber der Ringmatrize 4 im Wesentlichen den gleichen Abstand auf.

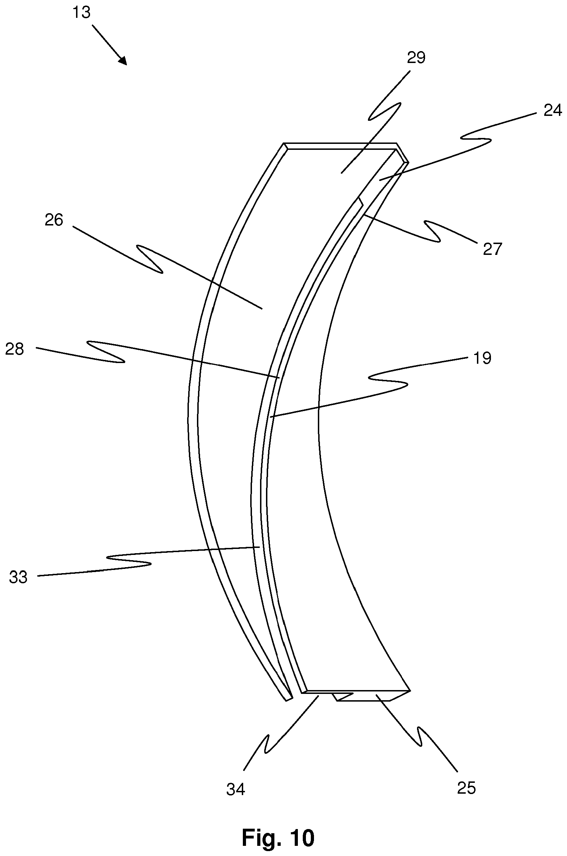

Das in Figur 10 dargestellte Ausführungsbeispiel entspricht im Wesentlichen dem in Figur 3 dargestellten Ausführungsbeispiel, wobei das Ablängmittel 19 als Absatz 24 ausgebildet ist. Zusätzlich weist die Ablängvorrichtung 13 jedoch eine Ausführöffnung 33 auf. An diese Ausführöffnung 33 schließt sich ein Ausführkanal 34 an. Hierdurch kann vermieden werden, dass aus den Durchgangsbohrungen 5 der Ringmatrize 4 herausragende Pellets 11 in einer undefinierten Länge von bereits abgetrennten und im Bereich zwischen dem Außenumfang der Ringmatrize 4 und der Radialleitfläche 26 herumfliegenden Pellets 11 abgeschlagen werden.

Die Ausführöffnung 33 ist hierbei derart ausgebildet und/oder derart, im Bereich der Radialleitfläche 26 und/oder des Ablängmittels 19, angeordnet, dass die abgetrennten Pellets 11 durch die Zentrifugalkraft von der der Ringmatrize 4 zugewandten Innenseite der Ablängvorrichtung 13, insbesondere durch den Grundkörper 25 hindurch, radial nach außen abführbar sind. Nachdem die abgeknickten Pellets über die zumindest eine Ausführöffnung 33 aus dem Ringspalt, d.h. aus dem Bereich zwischen Ringmatrize 4 und Ablängvorrichtung 13, ausgetreten sind, werden diese mittels des zumindest einen Ausführkanals 34 zu dem hier nicht dargestellten Auswurfbereich der Pelletpresse geführt.

Die Ausführöffnung 33 ist unmittelbar benachbart und/oder radial außenliegend zum Ablängmittel 19 - vorliegend zum Absatz 24 - angeordnet ist. Gemäß Figur 10 ist die Ausführöffnung 33 in der Anlagefläche 28 ausgebildet.

Figur 11 zeigt eine alternative Ausführungsform der ersten Ablängvorrichtung 13, im Querschnitt. Der Wesentliche Unterschied zu den vorangegangen Ausführungsformen besteht darin, dass die Radialleitfläche 26 eine erste 35 und eine zweite Schräge 36 aufweist. Hierdurch ist die Radialleitfläche im Querschnitt satteldachförmig ausgebildet. Vorteilhafterweise können abgetrennte Pellets 11 sehr schnell aus dem Bereich der Ablängmittel 19, 30 abgeführt werden.

Figur 12 zeigt eine, vorzugsweise in Umfangsrichtung der Ringmatrize 4 im Bereich eines Kollers 7, 8 (vgl. Fig. 1), anbringbare zweite Ablängvorrichtung 14 mit einer als Ablängmittel 19 ausgebildeten Radialleitfläche 26. Ferner umfasst die zweite Ablängvorrichtung 14 zumindest einen aufgrund der Innenseitendarstellung nicht ersichtlichen Befestigungsbereich, in dem die zweite Ablängvorrichtung 14 an einem feststehenden Gehäuseteil der Pelletpresse 1 derart befestigbar ist, dass das Ablängmittel 19 bzw. die dazu ausgebildete Radialleitfläche 26 im radial äußeren Bereich der drehbar gelagerten Ringmatrize 4 der Pelletpresse 1 und zu dieser beabstandet angeordnet werden kann. Die zweite Ablängvorrichtung 14 weist einen Grundkörper 25 auf, der an seiner Innenfläche die konkav gebogenen Radialleitfläche 26 aufweist, die als Ablängmittel 19 wirkt. Hierfür ist die Radialleitfläche 26 mittels des Befestigungsbereiches 17 in einem derartigen Abstand im radial äußeren Bereich der Ringmatrize 4 anbringbar, dass ein Pellet 11, das über die Ringmatrize 4 in deren Radialrichtung hinausragt und/oder im Bereich eines Kollers 7, 8 der Pelletpresse 1 radial nach außen, insbesondere gegen die Radialleitfläche 26, gepresst wird, im Bereich seines freien Endes, insbesondere seiner Stirnseite, an der Radialleitfläche 26 zum Anliegen kommt. Das Pellet 11 vermag sich an dieser als Ablängmittel 19 ausgebildeten Radialleitfläche 26 in Umfangsrichtung derart entlang zu bewegen, dass das Pellet 11 von der Radialleitfläche 26 mittels einer im Wesentlichen in Umfangsrichtung der Ringmatrize 4 wirkenden Reibkraft ausgelenkt wird, bis dieser im Bereich der Ringmatrize 4 abknickt. Das Pellet 11 wird somit nicht abrupt abgebremst, sondern an seiner dem Ablängmittel 19 zugewandten und in Radialrichtung zeigenden Stirnfläche über die Strecke eines definierten Winkelbereiches der Ringmatrize 4 in Umfangsrichtung geführt. Hierbei wird das Pellet 11 immer mehr aus seiner radialen Ausgangsstellung in Umfangsrichtung der Ringmatrize 4 ausgelenkt, bis der Pellet 11 im Bereich der Ringmatrize 4 sanft abknickt. Dies vermeidet ein undefiniertes Brechen oder Ablängen der Pellets 11 in unterschiedlich lange Pelletstücke.

Figur 13 zeigt eine Querschnittsansicht der zweiten Ablängvorrichtung 14 in einer alternativen Ausführungsform. Der Wesentliche Unterschied zu der vorangegangen Ausführungsform besteht darin, dass die Radialleitfläche 26 eine erste 35 und eine zweite Schräge 36 aufweist. Hierdurch ist die Radialleitfläche 26 im Querschnitt satteldachförmig ausgebildet. Vorteilhafterweise können somit abgetrennte Pellets 11 sehr schnell abgeführt werden.

Selbstverständlich ist es ebenso denkbar, dass die vorstehend erläuterten alternativen Ablängvorrichtungen ebenfalls eine derartige Ausführöffnung 33 und/oder einen entsprechenden Ausführkanal 34 aufweisen.

Die vorliegende Erfindung ist nicht auf die dargestellten und beschriebenen Ausführungsbeispiele beschränkt. Abwandlungen im Rahmen der Patentansprüche sind möglich.

### Bezugszeichenliste

- 1: Pelletpresse
- 2: Gehäuseteil
- 3: Auswurföffnung
- 4: Ringmatrize
- 5: Durchgangsbohrungen
- 6: Pressraum
- 7: erster Koller
- 8: zweiter Koller
- 9: Innenumfang
- 10: Pressmaterial
- 11: Pellet
- 12: Außenumfang
- 13: erste Ablängvorrichtung
- 14: zweite Ablängvorrichtung
- 15: dritte Ablängvorrichtung
- 16: vierte Ablängvorrichtung
- 17: Befestigungsbereich
- 18: Befestigungseinrichtung
- 19: erstes Ablängmittel
- 20: freies Ende
- 21: bogenförmige Kontur
- 22: Nut
- 23: Rippe
- 24: Absatz
- 25: Grundkörper
- 26: Radialleitfläche
- 27: Anlagekante
- 28: Anlagefläche
- 29: Zuführöffnung
- 30: zweites Ablängmittel
- 31: Anschlag
- 32: Eintrittsfläche
- 33: Ausführöffnung
- 34: Ausführkanal
- 35: erste Schräge
- 36: zweite Schräge

- α: erster Steigungswinkel
- β: zweiter Steigungswinkel

## Patentansprüche

1. Ablängvorrichtung (13; 14; 15; 16) für eine Pelletpresse (1) mit
zumindest einem Ablängmittel (19) für biogene faserhaltige Pellets (11) und
zumindest einem Befestigungsbereich (17), in dem die Ablängvorrichtung (13; 14; 15; 16) an einem feststehenden Gehäuseteil (2) der Pelletpresse (1) derart befestigbar ist, dass das Ablängmittel (19) im radial äußeren Bereich einer drehbar gelagerten Ringmatrize (4) der Pelletpresse (1) und zu dieser beabstandet anordenbar ist,
wobei das Ablängmittel (19) eine konkave bogenförmige Kontur (21) aufweist und mittels des Befestigungsbereiches (17) derart im radial äußeren Bereich der Ringmatrize (4) anbringbar ist, dass sich das Ablängmittel (19) mit seiner bogenförmigen Kontur (21) im Wesentlichen helixförmig über zumindest den Bereich einer der radialen Durchgangsbohrungen (5) der Ringmatrize (4) erstreckt,
so dass ein Pellet (11), das über die Ringmatrize (4) in deren Radialrichtung mit einer größeren Länge als der Abstand zwischen Ringmatrize (4) und Ablängmittel (19) aus der Durchgangsbohrung (5) hinausragt, im Bereich seines freien Endes (20) am Ablängmittel (19) zum Anliegen kommt und sich an diesem in Umfangsrichtung der Ringmatrize (4) derart entlang zu bewegen vermag, dass das Pellet (11) vom Ablängmittel (19) mittels einer eine Axialkomponente aufweisenden Kraft ausgelenkt wird, so dass es im Bereich der Ringmatrize (4) abknickt,
**dadurch gekennzeichnet,**
**dass** die Ablängvorrichtung (13; 14; 15; 16) einen Grundkörper (25) mit einer konkaven, insbesondere kreisbogenförmigen, Radialleitfläche (26) aufweist, in deren Bereich das Ablängmittel (19) angeordnet ist, wobei die Radialleitfläche (26) zum radialen Führen von im Bereich der Durchgangsbohrungen (5) gebrochenen Pellets (11) im Bereich ihres freien Endes (20) zum Ablängmittel (19) hin ausgebildet ist, so dass diese Pellets (11) an einem unkontrollierten radialen Herausschleudern gehindert werden.

2. Ablängvorrichtung nach Anspruch 1, **dadurch gekennzeichnet, dass** der Abstand in Radialrichtung der Ringmatrize (4) zwischen Ablängmittel (19) und der dafür vorgesehenen Ringmatrize (4) im Wesentlichen konstant ist.

3. Ablängvorrichtung nach Anspruch 1 oder 2, **dadurch gekennzeichnet, dass** das helixförmige Ablängmittel (19) zum axialen Auslenken des Pellets (11) eine Anlagekante (27) und/oder Anlagefläche (28) aufweist.

4. Ablängvorrichtung nach einem oder mehreren der vorherigen Ansprüche, **dadurch gekennzeichnet, dass** sich das Ablängmittel (19) im Wesentlichen helixförmig über zumindest einen Bereich der konkaven, insbesondere kreisbogenförmigen, Radialleitfläche (26), insbesondere in Umfangsrichtung der Ringmatrize (4) über seine gesamte Länge, erstreckt.

5. Ablängvorrichtung nach einem oder mehreren der vorherigen Ansprüche, **dadurch gekennzeichnet, dass** das Ablängmittel (19), insbesondere in der Radialleitfläche (26), als Absatz (24), Rippe (23) und/oder Nut (22) ausgebildet ist.

6. Ablängvorrichtung nach einem oder mehreren der vorherigen Ansprüche, **dadurch gekennzeichnet, dass** die Ablängvorrichtung (13; 14; 15; 16) zumindest ein zweites Ablängmittel (30) aufweist, das zum ersten Ablängmittel (19) in Axial- und/oder Umfangsrichtung beabstandet oder benachbart angeordnet ist.

7. Ablängvorrichtung nach einem oder mehreren der vorherigen Ansprüche, **dadurch gekennzeichnet, dass** der Grundkörper (25) zumindest eine Ausführöffnung (33) und/oder zumindest einen Ausführkanal (34) aufweist, so dass abgetrennte Pellets (11) durch die Zentrifugalkraft von der radial innenliegenden Radialleitfläche (26), insbesondere durch den Grundkörper (25), radial nach außen führbar sind.

8. Ablängvorrichtung (13; 14; 15; 16) für eine Pelletpresse (1) mit
zumindest einem Ablängmittel (19) für biogene faserhaltige Pellets (11) und
zumindest einem Befestigungsbereich (17), in dem die Ablängvorrichtung (13; 14; 15; 16) an einem feststehenden Gehäuseteil (2) der Pelletpresse (1) derart befestigbar ist, dass das Ablängmittel (19) im radial äußeren Bereich einer drehbar gelagerten Ringmatrize (4) der Pelletpresse (1) und zu dieser beabstandet angeordnet werden kann,
**dadurch gekennzeichnet,**
**dass** die Ablängvorrichtung (13; 14; 15; 16) einen Grundkörper (25) mit einer konkaven, insbesondere kreisbogenförmigen, Radialleitfläche (26) aufweist,
die als Ablängmittel (19) ausgebildet ist,
wobei die Radialleitfläche (26) mittels des Befestigungsbereiches (17) in einem derartigen Abstand im radial äußeren Bereich der Ringmatrize (4) anbringbar ist,
**dass** ein Pellet (11), das über die Ringmatrize (4) in deren Radialrichtung hinausragt und/oder im Bereich eines Kollers (7; 8) der Pelletpresse (1) radial nach außen gepresst wird, mit der Stirnseite seines freien Endes (20) an der Radialleitfläche (26) zum Anliegen kommt und sich an dieser in Umfangsrichtung der Ringmatrize (4) derart entlang zu bewegen vermag, dass das Pellet (11) von der Radialleitfläche (26) mittels einer in Umfangsrichtung der Ringmatrize (4) wirkenden Reibkraft ausgelenkt wird, so dass es im Bereich der Ringmatrize (4) abknickt.

9. Ablängvorrichtung nach dem Anspruch 8, **dadurch gekennzeichnet, dass** sich die Radialleitfläche (26) in Axialrichtung der Ringmatrize (4) über zumindest deren gesamte Breite erstreckt.

10. Ablängvorrichtung nach einem oder mehreren der vorherigen Ansprüche, **dadurch gekennzeichnet, dass** die Ablängvorrichtung (13; 14: 15; 16) in dem zumindest einen Befestigungsbereich (17) eine Befestigungseinrichtung (18) zum lösbaren Befestigen an dem feststehenden Gehäuseteil (2) der Pelletpresse (1) und/oder zum, insbesondere stufenlosen, Verstellen gegenüber dieser in Radialrichtung aufweist.

11. Pelletpresse (1) zum Pressen von biogenen faserhaltigen Pellets (11), mit
einer rotierbaren Ringmatrize (4), die im Wesentlichen radiale Durchgangsbohrungen (5) aufweist und in ihrem Inneren einen Pressraum (6) ausbildet, in den biogenes faserhaltiges Pressmaterial (10) zuführbar ist,
zumindest einem Koller (7; 8), der zu der Ringmatrize (4) exzentrisch angeordnet ist und sich an deren Innenumfang (9) derart abzurollen vermag, dass das Pressmaterial (10) zur Ausbildung der Pellets (11) durch die Durchgangsbohrungen (5) gepresst wird, und
zumindest einer ein Ablängmittel (19) aufweisenden Ablängvorrichtung (13; 14; 15; 16), die an einem feststehenden Gehäuseteil (2) der Pelletpresse (1) derart befestigt ist, dass das Ablängmittel (19) im radial äußeren Bereich der drehbar gelagerten Ringmatrize (4) zu dieser beabstandet angeordnet ist,
**dadurch gekennzeichnet,**
**dass** die Pelletpresse (1) zumindest eine erste Ablängvorrichtung (13; 14; 15; 16) nach einem oder mehreren der vorherigen Ansprüche 1 bis 7 und/oder
zumindest eine zweite Ablängvorrichtung (13; 14; 15; 16) nach einem oder mehreren der vorherigen Ansprüche 8 bis 9 aufweist.

12. Pelletpresse nach dem Anspruch 11, **dadurch gekennzeichnet, dass** die erste Ablängvorrichtung (13; 15) in Umfangsrichtung der Ringmatrize (4) im Bereich zwischen zwei benachbarten Kollern (7; 8) und/oder
die zweite Ablängvorrichtung (14; 16) im Bereich des zumindest einen Kollers (7; 8) angeordnet ist.

13. Pelletpresse nach Anspruch 11 oder 12, **dadurch gekennzeichnet, dass** die erste und/oder zweite Ablängvorrichtung (13; 14; 15; 16) als Ringsegment ausgebildet ist und/oder
dass die Radialleitflächen (26) zumindest zweier als Ringsegment ausgebildeter Ablängvorrichtungen (13; 14; 15; 16) einen geschlossenen Ring ausbilden.

14. Pelletpresse nach einem oder mehreren der Ansprüche 11 bis 13, **dadurch gekennzeichnet, dass** zumindest zwei als Ringsegment ausgebildete Ablängvorrichtungen (13; 14; 15; 16) zueinander in Axial- und/oder Umfangsrichtung der Ringmatrize (4) beabstandet oder benachbart angeordnet sind.

15. Verfahren zur Herstellung von biogenen faserhaltigen Pellets, insbesondere Holzpellets, mittels einer Pelletpresse (1), wobei das Verfahren folgende Schritte umfasst:
- es wird biogenes, faserhaltiges Pressmaterial in einen Pressraum (6) zugeführt und mittels mindestens eines sich am Innenumfang einer rotierenden Ringmatrize (4) abrollenden, exzentrisch zu dieser angeordneten Kollers (7; 8) durch Durchgangsbohrungen (5) der Ringmatrize (4) zur Ausbildung der Pellets (11) gepresst,
- die Pellets werden von einer zumindest ein Ablängmittel (19) aufweisenden und an einem feststehenden Gehäuseteil (2) der Pelletpresse (1) in zumindest einem Befestigungsbereich (17) befestigten Ablängvorrichtung (13; 14; 15; 16) abgeknickt, wobei das Ablängmittel (19) eine konkave bogenförmige Kontur (21) aufweist und im radial äußeren Bereich der drehbar gelagerten Ringmatrize (4) und zu dieser beabstandet angeordnet ist, wobei sich das Ablängmittel (19) mit seiner bogenförmigen Kontur (21) im Wesentlichen helixförmig über zumindest den Bereich einer der radialen Durchgangsbohrungen (5) der Ringmatrize (4) erstreckt,
- ein Pellet (11), das über die Ringmatrize (4) in deren Radialrichtung mit einer größeren Länge als der Abstand zwischen Ringmatrize (4) und Ablängmittel (19) aus der Durchgangsbohrung (5) hinausragt, kommt im Bereich seines freien Endes (20) am Ablängmittel (19) zum Anliegen und bewegt sich an diesem in Umfangsrichtung der Ringmatrize (4) derart entlang, dass das Pellet (11) vom Ablängmittel (19) mittels einer eine Axialkomponente aufweisenden Kraft ausgelenkt wird, so dass es im Bereich der Ringmatrize (4) abknickt,
**dadurch gekennzeichnet,**
**dass** die Ablängvorrichtung (13; 14; 15; 16) einen Grundkörper (25) mit einer konkaven, insbesondere kreisbogenförmigen, Radialleitfläche (26) aufweist, in deren Bereich das Ablängmittel (19) angeordnet ist, wobei die Radialleitfläche (26) im Bereich der Durchgangsbohrungen (5) gebrochene Pellets (11) im Bereich ihres freien Endes (20) radial zum Ablängmittel (19) führt, so dass diese Pellets (11) an einem unkontrollierten radialen Herausschleudern gehindert werden.

16. Verfahren zur Herstellung von biogenen faserhaltigen Pellets, insbesondere Holzpellets, mittels einer Pelletpresse (1), wobei das Verfahren folgende Schritte umfasst:
- es wird biogenes, faserhaltiges Pressmaterial in einen Pressraum (6) zugeführt und mittels mindestens eines sich am Innenumfang einer rotierenden Ringmatrize (4) abrollenden, exzentrisch zu dieser angeordneten Kollers (7; 8) durch Durchgangsbohrungen (5) der Ringmatrize (4) zur Ausbildung der Pellets (11) gepresst,
- die Pellets werden von einer ein Ablängmittel (19) aufweisenden und an einem feststehenden Gehäuseteil (2) der Pelletpresse (1) in zumindest einem Befestigungsbereich (17) befestigten Ablängvorrichtung (13; 14; 15; 16) abgeknickt, wobei das Ablängmittel (19) im radial äußeren Bereich der drehbar gelagerten Ringmatrize (4) und zu dieser beabstandet angeordnet ist,
**dadurch gekennzeichnet, dass** die Ablängvorrichtung (13; 14; 15; 16) einen Grundkörper (25) mit einer konkaven, insbesondere kreisbogenförmigen, Radialleitfläche (26) aufweist, die als Ablängmittel (19) ausgebildet ist,
wobei ein Pellet (11), das über die Ringmatrize (4) in deren Radialrichtung hinausragt und/oder im Bereich eines Kollers (7; 8) der Pelletpresse (1) radial nach außen gepresst wird, mit der Stirnseite seines freien Endes (20) an der Radialleitfläche (26) zum Anliegen kommt und sich an dieser in Umfangsrichtung der Ringmatrize (4) derart entlang bewegt, dass das Pellet (11) von der Radialleitfläche (26) mittels einer in Umfangsrichtung der Ringmatrize (4) wirkenden Reibkraft ausgelenkt wird, so dass es im Bereich der Ringmatrize (4) abknickt.

## Claims

1. A cutting-to-length device (13; 14; 15; 16) for a pellet press (1), having
at least one cutting-to-length means (19) for biogenic fibrous pellets (11), and
at least one attachment area (17) in which the cutting-to-length device (13; 14; 15; 16) can be attached to a stationary housing part (2) of the pellet press (1) such that the cutting-to-length means (19) can be disposed in a radially outer area of a rotatably mounted annular die (4) of the pellet press (1) and spaced apart from the same,
the cutting-to-length means (19) having a concave, curvilinear contour (21) and being able to be affixed by means of the attachment area (17) in the radially outer area of the annular die (4) such that the cutting-to-length means (19) with its curvilinear contour (21) extends essentially helically across at least the area of one of the radial through-holes (5) of the annular die (4),
so that a pellet (11) protruding out of the through-hole (5) past the annular die (4) in the radial direction thereof by a greater length than the distance between the annular die (4) and the cutting-to-length means (19) contacts the cutting-to-length means (19) in the region of its free end (20), and said pellet is able to move along in the circumferential direction of the annular die (4) in such a way that the pellet (11) is deflected by the cutting-to-length means (19) by means of a force having an axial component, so that it snaps off in the area of the annular die (4),
**characterized in that**
the cutting-to-length device (13; 14; 15; 16) comprises a basic body (25) having a concave, particularly circular arc-shaped radial guide surface (26) in the area of which the cutting-to-length means (19) is disposed, wherein the radial guide surface (26) is implemented for radially guiding pellets (11) broken in the area of the through-holes (5) toward the cutting-to-length means (19) in the region of their free end(20), so that said pellets (11) are prevented from being ejected radially in an uncontrolled manner.

2. The cutting-to-length device according to claim 1, **characterized in that** the distance in the radial direction of the annular die (4) between the cutting-to-length means (19) and the annular die (4) provided for the same is substantially constant.

3. The cutting-to-length device according to claim 1 or 2, **characterized in that** the helical cutting-to-length means (19) comprises a contact edge (27) and/or contact surface (28) for axially deflecting the pellet (11).

4. The cutting-to-length device according to one or more of the preceding claims, **characterized in that** the cutting-to-length means (19) extends essentially helically across at least one area of the concave, particularly circular arc-shaped radial guide surface (26), particularly in the circumferential direction of the annular die (4) over the entire length thereof.

5. The cutting-to-length device according to one or more of the preceding claims, **characterized in that** the cutting-to-length means (19) is implemented as an offset (24), rib (23), and/or groove (22), particularly in the radial guide surface (26).

6. The cutting-to-length device according to one or more of the preceding claims, **characterized in that** the cutting-to-length device (13; 14; 15; 16) comprises at least one second cutting-to-length means (30) spaced apart from or adjacent to the first cutting-to-length means (19) in the axial and/or circumferential direction.

7. The cutting-to-length device according to one or more of the preceding claims, **characterized in that** the basic body (25) comprises at least one outlet opening (33) and/or at least one outlet duct (34), so that severed pellets (11) can be guided radially outward by centrifugal force from the radially inner radial guide surface (26), particularly through the basic body (25).

8. A cutting-to-length device (13; 14; 15; 16) for a pellet press (1), having
at least one cutting-to-length means (19) for biogenic fibrous pellets (11), and
at least one attachment area (17) in which the cutting-to-length device (13; 14; 15; 16) can be attached to a stationary housing part (2) of the pellet press (1) such that the cutting-to-length means (19) can be disposed in a radially outer area of a rotatably mounted annular die (4) of the pellet press (1) and spaced apart from the same,
**characterized in that**
the cutting-to-length device (13; 14; 15; 16) comprises a basic body (25) having a concave, particularly circular arc-shaped radial guide surface (26) implemented as a cutting-to-length means (19),
the radial guide surface (26) being able to be affixed by means of the attachment area (17) spaced apart in the radially outer area of the annular die (4) such that a pellet (11) protruding past the annular die (4) in the radial direction thereof and/or pressed radially outward in the area of a Koller roller (7; 8) of the pellet press (1) contacts the radial guide surface (26) at the end face of its free end (20) and is able to move along said surface in the circumferential direction of the annular die (4) such that the pellet (11) is deflected by the radial guide surface (26) by means of a friction force acting in the circumferential direction of the annular die (4), so that said pellet snaps off in the region of the annular die (4).

9. The cutting-to-length device according to claim 8, **characterized in that** the radial guide surface (26) extends in the axial direction of the annular die (4) across at least the entire width thereof.

10. The cutting-to-length device according to one or more of the preceding claims, **characterized in that** the cutting-to-length device (13; 14: 15; 16) comprises an attaching device (18) in the at least one attaching area (17) for releasably attaching to the stationary housing part (2) of the pellet press (1) and/or for adjusting, particularly continuously, relative to the same in the radial direction.

11. A pellet press (1) for pressing biogenic fibrous pellets (11), having
a rotating annular die (4) comprising substantially radial through-holes (5) and wherein the annular die (4) creates a pressing space (6) in its interior into which biogenic fibrous press material (10) can be fed,
at least one Koller roller (7; 8) eccentrically disposed with respect to the annular die (4) and capable of rolling along the inner perimeter (9) thereof such that the press material (10) for creating the pellets (11) is pressed through the through-holes (5), and
at least one cutting-to-length device (13; 14; 15; 16) comprising cutting-to-length means (19), said cutting-to-length device (13; 14; 15; 16) attached to a stationary housing part (2) of the pellet press (1) such that the cutting-to-length means (19) is disposed in the radially outer area of a rotatably mounted annular die (4) and spaced apart from the same,
**characterized in that**
the pellet press (1) comprises at least one first cutting-to-length device (13; 14; 15; 16) according to one or more of the preceding claims 1 through 7, and/or
comprises at least one second cutting-to-length device (13; 14; 15; 16) according to one or more of the preceding claims 8 through 9.

12. The pellet press according to claim 11, **characterized in that** the first cutting-to-length device (13; 15) is disposed in the area between two adjacent Koller rollers (7; 8) in the circumferential direction of the annular die (4), and/or
the second cutting-to-length device (14; 16) is disposed in the area of the at least one Koller roller (7; 8).

13. The pellet press according to claim 11 or 12, **characterized in that** the first and/or second cutting-to-length device (13; 14; 15; 16) is implemented as an annular segment and/or
the radial guide surfaces (26) of at least two cutting-to-length devices (13; 14; 15; 16) implemented as annular segments form a closed ring.

14. The pellet press according to one or more of the claims 11 through 13, **characterized in that** at least two cutting-to-length devices (13; 14; 15; 16) implemented as annular segments are spaced apart from or adjacent to each other in the axial and/or circumferential direction of the annular die (4).

15. A method for producing biogenic fibrous pellets, particularly wood pellets, by means of a pellet press (1), the method comprising the following steps:
- biogenic fibrous press material is fed into a pressing space (6) and is pressed by means of at least one Koller roller (7; 8), configured for rolling along the inner perimeter of a rotating annular die (4) and eccentrically arranged with respect to said die, through through-holes (5) of the annular die (4) for creating the pellets (11),
- the pellets are snapped off by a cutting-to-length device (13; 14; 15; 16) comprising at least one cutting-to-length means (19) and attached to a stationary housing part (2) of the pellet press (1) in at least one attaching area (17), the cutting-to-length means (19) having a concave curvilinear contour (21) and being disposed in the radially outer area of the rotatably mounted annular die (4) and spaced apart from the same, the cutting-to-length means (19) with its curvilinear contour (21) extending essentially helically across at least the area of one of the radial through-holes (5) of the annular die (4),
- a pellet (11) protruding out of the through-hole (5) past the annular die (4) in the radial direction thereof by a greater length than the spacing between the annular die (4) and cutting-to-length means (19) contacts the cutting-to-length means (19) in the region of its free end (20) and moves along the cutting-to-length-means (19) in the circumferential direction of the annular die (4) such that the pellet (11) is deflected by the cutting-to-length means (19) by means of a force having an axial component, so that said pellet snaps off in the area of the annular die (4),
**characterized in that**
the cutting-to-length device (13; 14; 15; 16) comprises a basic body (25) having a concave, particularly circular arc-shaped radial guide surface (26) in the area of which the cutting-to-length means (19) is disposed, wherein the radial guide surface (26) radially guides pellets (11) broken in the area of the through-holes (5) toward the cutting-to-length means (19) in the region of their free end (20), so that said pellets (11) are prevented from being ejected radially in an uncontrolled manner.

16. A method for producing biogenic fibrous pellets, particularly wood pellets, by means of a pellet press (1), the method comprising the following steps:
- biogenic fibrous press material is fed into a pressing space (6) and is pressed by means of at least one Koller roller (7; 8), configured for rolling along the inner perimeter of a rotating annular die (4) and eccentrically arranged with respect to said die, through through-holes (5) of the annular die (4) for creating the pellets (11),
- the pellets are snapped off by at least one cutting-to-length device (13; 14; 15; 16) comprising a cutting-to-length means (19) and attached to a stationary housing part (2) of the pellet press (1) in at least one attaching area (17), the cutting-to-length means (19) being disposed in the radially outer area of the rotatably mounted annular die (4) and spaced apart from the same,
**characterized in that** the cutting-to-length device (13; 14; 15; 16) comprises a basic body (25) having a concave, particularly circular arc-shaped radial guide surface (26) implemented as a cutting-to-length means (19),
wherein a pellet (11) protruding past the annular die (4) in the radial direction thereof and/or pressed radially outward in the area of a Koller roller (7; 8) of the pellet press (1) contacts the radial guide surface (26) at the end face of its free end (20) and moves along said radial guide surface (26) in the circumferential direction of the annular die (4) such that the pellet (11) is deflected by the radial guide surface (26) by means of a friction force acting in the circumferential direction of the annular die (4), so that said pellet snaps off in the region of the annular die (4).

## Revendications

1. Dispositif de coupe à longueur (13 ; 14 ; 15 ; 16) pour une presse à pelleter (1), avec
au moins un moyen de coupe à longueur (19) pour des pellets (11) biogènes contenant des fibres et
au moins une zone de fixation (17) dans laquelle le dispositif de coupe à longueur (13 ; 14 ; 15 ; 16) peut être fixé sur une partie (2) de carter stationnaire de la presse à pelleter (1) de manière à ce que le moyen de coupe à longueur (19) soit disposé dans la zone radialement extérieure d'une filière annulaire (4) montée de manière rotative de la presse à pelleter (1), à distance de celle-ci,
dans lequel le moyen de coupe à longueur (19) présente un contour (21) concave en forme d'arc et peut être monté au moyen de la zone de fixation (17) dans la zone radialement extérieure de la filière annulaire (4) de manière à ce que le moyen de coupe à longueur (19) s'étende par son contour (21) en forme d'arc sensiblement en forme d'hélice sur au moins la zone de l'un des alésages traversants (5) radiaux de la filière annulaire (4),
de sorte qu'un pellet (11) qui déborde de l'alésage traversant (5) sur la filière annulaire (4) dans la direction radiale de celle-ci par une longueur supérieure à la distance entre la filière annulaire (4) et le moyen de coupe à longueur (19), vienne en contact avec le moyen de coupe à longueur (19) dans la zone de son extrémité libre (20) et puisse se déplacer le long de celui-ci dans la direction circonférentielle de la filière annulaire (4) de telle sorte que le pellet (11) soit dévié par le moyen de coupe à longueur (19) au moyen d'une force ayant une composante axiale, de sorte qu'il se coude dans la zone de la filière annulaire (4),
**caractérisé en ce que**
le dispositif de coupe à longueur (13 ; 14 ; 15 ; 16) présente un corps de base (25) avec une surface de guidage radial (26) concave, en particulier en forme d'arc de cercle, dans la zone de laquelle est disposé le moyen de coupe à longueur (19), dans lequel la surface de guidage radial (26) est conçue pour guider radialement des pellets (11) brisés dans la zone des alésages traversants (5) dans la zone de leur extrémité libre (20) vers le moyen de coupe à longueur (19), de sorte que ces pellets (11) sont empêchés d'être éjectés radialement de manière incontrôlée.

2. Dispositif de coupe à longueur selon la revendication 1, **caractérisé en ce que** la distance dans la direction radiale de la filière annulaire (4) entre le moyen de coupe à longueur (19) et la filière annulaire (4) prévue à cet effet est essentiellement constante.

3. Dispositif de coupe à longueur selon la revendication 1 ou 2, **caractérisé en ce que** le moyen de coupe à longueur (19) en forme d'hélice présente une arête d'appui (27) et/ou une surface d'appui (28) pour la déviation axiale des pellets (11).

4. Dispositif de coupe à longueur selon l'une quelconque ou plusieurs des revendications précédentes, **caractérisé en ce que** le moyen de coupe à longueur (19) s'étend sensiblement en forme d'hélice sur au moins une zone de la surface de guidage radial (26) concave, en particulier en forme d'arc de cercle, en particulier dans la direction circonférentielle de la filière annulaire (4) sur toute sa longueur.

5. Dispositif de coupe à longueur selon l'une quelconque ou plusieurs des revendications précédentes, **caractérisé en ce que** le moyen de coupe à longueur (19) se présente sous la forme d'un épaulement (24), d'une nervure (23) et/ou d'une rainure (22), en particulier dans la surface de guidage radial (26).

6. Dispositif de coupe à longueur selon l'une quelconque ou plusieurs des revendications précédentes, **caractérisé en ce que** le dispositif de coupe à longueur (13 ; 14 ; 15 ; 16) comporte au moins un deuxième moyen de coupe à longueur (30) qui est disposé à distance ou à côté du premier moyen de coupe à longueur (19) dans la direction axiale et/ou circonférentielle.

7. Dispositif de coupe à longueur selon l'une quelconque ou plusieurs des revendications précédentes, **caractérisé en ce que** le corps de base (25) présente au moins une ouverture de sortie (33) et/ou au moins un canal de sortie (34), de sorte que des pellets (11) coupés peuvent être guidés radialement vers l'extérieur par la force centrifuge depuis la surface de guidage radial (26) radialement intérieure, en particulier à travers le corps de base (25).

8. Dispositif de coupe à longueur (13 ; 14 ; 15 ; 16) pour une presse à pelleter (1), avec
au moins un moyen de coupe à longueur (19) pour des pellets (11) biogènes contenant des fibres et
au moins une zone de fixation (17) dans laquelle le dispositif de coupe à longueur (13 ; 14 ; 15 ; 16) peut être fixé sur une partie (2) de carter stationnaire de la presse à pelleter (1) de manière à ce que le moyen de coupe à longueur (19) puisse être disposé dans la zone radialement extérieure d'une filière annulaire (4) montée de manière rotative de la presse à pelleter (1), à distance de celle-ci,
**caractérisé en ce que**
le dispositif de coupe à longueur (13 ; 14 ; 15 ; 16) présente un corps de base (25) avec une surface de guidage radial (26) concave, en particulier en forme d'arc de cercle,
qui se présente sous la forme d'un moyen de coupe à longueur (19), dans lequel la surface de guidage radial (26) peut être fixée au moyen de la zone de fixation (17) à une distance dans la zone radialement extérieure de la filière annulaire (4)
telle qu'un pellet (11), qui déborde de la filière annulaire (4) dans la direction radiale de celle-ci et/ou est pressé radialement vers l'extérieur dans la zone d'un rouleau-presseur (7 ; 8) de la presse à pelleter (1), vient en appui avec la face frontale de son extrémité libre (20) contre la surface de guidage radial (26) et peut se déplacer le long de celle-ci dans la direction circonférentielle de la filière annulaire (4) de telle sorte que le pellet (11) soit dévié de la surface de guidage radiale (26) au moyen d'une force de friction agissant dans la direction circonférentielle de la filière annulaire (4), de sorte qu'il se coude dans la zone de la filière annulaire (4).

9. Dispositif de coupe à longueur selon la revendication 8, **caractérisé en ce que** la surface de guidage radial (26) s'étend dans la direction axiale de la filière annulaire (4) sur au moins toute la largeur de cette dernière.

10. Dispositif de coupe à longueur selon l'une quelconque ou plusieurs des revendications précédentes, **caractérisé en ce que** le dispositif de coupe à longueur (13 ; 14 ; 15 ; 16) présente, dans l'au moins une zone de fixation (17), un dispositif de fixation (18) pour la fixation amovible sur la partie (2) de carter stationnaire de la presse à pelleter (1) et/ou pour le réglage, en particulier sans palier, par rapport à celle-ci dans la direction radiale.

11. Presse à pelleter (1) pour presser des pellets (11) biogènes contenant des fibres, avec
une filière annulaire (4) rotative qui présente des alésages traversants (5) sensiblement radiaux et qui forme en son intérieur un espace de pressage (6) dans lequel peut être introduite une matière à presser (10) biogène contenant des fibres,
au moins un rouleau-presseur (7 ; 8) qui est disposé de manière excentrique par rapport à la filière annulaire (4) et qui peut rouler sur sa circonférence intérieure (9) de manière à ce que la matière à presser (10) soit pressée à travers les alésages traversants (5) pour former les pellets (11), et
au moins un dispositif de coupe à longueur (13 ; 14 ; 15 ; 16) présentant un moyen de coupe à longueur (19), qui est fixé sur une partie (2) de carter stationnaire de la presse à pelleter (1) de manière à ce que le moyen de coupe à longueur (19) soit disposé dans la zone radialement extérieure de la filière annulaire (4) montée de manière rotative, à distance de celle-ci,
**caractérisé en ce que**
la presse à pelleter (1) comprend au moins un premier dispositif de coupe à longueur (13 ; 14 ; 15 ; 16) selon l'une quelconque ou plusieurs des revendications 1 à 7 précédentes et/ou au moins au moins un deuxième dispositif de coupe à longueur (13 ; 14 ; 15 ; 16) selon l'une quelconque ou plusieurs des revendications 8 à 9 précédentes.

12. Presse à pelleter selon la revendication 11, **caractérisée en ce que** le premier dispositif de coupe à longueur (13 ; 15) est disposé dans la direction circonférentielle de la filière annulaire (4) dans la zone entre deux rouleaux-presseurs (7 ; 8) voisins et/ou
le deuxième dispositif de coupe à longueur (14 ; 16) est disposé dans la zone de l'au moins un rouleau-presseur (7 ; 8).

13. Presse à pelleter selon la revendication 11 ou 12, **caractérisée en ce que** le premier et/ou le deuxième dispositif de coupe à longueur (13 ; 14 ; 15 ; 16) sont/est réalisé(s) sous la forme d'un segment annulaire, et/ou
**en ce que** les surfaces de guidage radial (26) d'au moins deux dispositifs de coupe à longueur (13 ; 14 ; 15 ; 16) réalisés sous forme de segments annulaires forment un anneau fermé.

14. Presse à pelleter selon l'une quelconque ou plusieurs des revendications 11 à 13, **caractérisée en ce qu'**au moins deux dispositifs de coupe à longueur (13 ; 14 ; 15 ; 16) réalisés sous forme de segments annulaires sont disposés à distance ou à côté l'un de l'autre dans la direction axiale et/ou circonférentielle de la filière annulaire (4).

15. Procédé pour fabriquer des pellets biogènes contenant des fibres, en particulier des pellets de bois, au moyen d'une presse à pelleter (1), le procédé comprenant les étapes suivantes :
- une matière à presser biogène contenant des fibres est introduite dans un espace de pressage (6) et pressée au moyen d'au moins un rouleau-presseur (7 ; 8) roulant sur la circonférence intérieure d'une filière annulaire (4) rotative et disposé excentriquement par rapport à celle-ci, à travers des alésages traversants (5) dans la filière annulaire (4) pour former les pellets (11),
- les pellets sont coudés par un dispositif de coupe à longueur (13 ; 14 ; 15 ; 16) présentant au moins un moyen de coupe à longueur (19) et fixé sur une partie (2) de carter stationnaire de la presse à pelleter (1) dans au moins une zone de fixation (17), dans lequel le moyen de coupe à longueur (19) présente un contour (21) concave en forme d'arc et est disposé dans la zone radialement extérieure de la filière annulaire (4) montée de manière rotative et à distance de celle-ci, dans lequel le moyen de coupe à longueur (19) s'étend par son contour (21) en forme d'arc sensiblement en forme d'hélice sur au moins la zone de l'un des alésages traversants (5) radiaux de la filière annulaire (4),
- un pellet (11) qui déborde de l'alésage traversant (5) sur la filière annulaire (4) dans la direction radiale de celle-ci par une longueur supérieure à la distance entre la filière annulaire (4) et le moyen de coupe à longueur (19), vient en contact avec le moyen de coupe à longueur (19) dans la zone de son extrémité libre (20) et se déplace le long de celui-ci dans la direction circonférentielle de la filière annulaire (4) de telle sorte que le pellet (11) soit dévié par le moyen de coupe à longueur (19) au moyen d'une force ayant une composante axiale, de sorte qu'il se coude dans la zone de la filière annulaire (4),
**caractérisé en ce que**
le dispositif de coupe à longueur (13 ; 14 ; 15 ; 16) présente un corps de base (25) avec une surface de guidage radial (26) concave, en particulier en forme d'arc de cercle, dans la zone de laquelle est disposé le moyen de coupe à longueur (19), dans lequel la surface de guidage radial (26) guide radialement, vers le moyen de coupe à longueur (19), dans la zone de son extrémité libre (20), des pellets (11) brisés dans la zone des alésages traversants (5), de sorte que ces pellets (11) sont empêchés d'être éjectés radialement de manière incontrôlée.

16. Procédé pour fabriquer des pellets biogènes contenant des fibres, en particulier des pellets de bois, au moyen d'une presse à pelleter (1), le procédé comprenant les étapes suivantes :
- une matière à presser biogène contenant des fibres est introduite dans un espace de pressage (6) et pressée au moyen d'au moins un rouleau-presseur (7 ; 8) roulant sur la circonférence intérieure d'une filière annulaire (4) rotative et disposé excentriquement par rapport à celle-ci, à travers des alésages traversants (5) dans la filière annulaire (4) pour former les pellets (11),
- les pellets sont coudés par un dispositif de coupe à longueur (13 ; 14 ; 15 ; 16) présentant un moyen de coupe à longueur (19) et fixé sur une partie (2) de carter stationnaire de la presse à pelleter (1) dans au moins une zone de fixation (17), dans lequel le moyen de coupe à longueur (19) est disposé dans la zone radialement extérieure de la filière annulaire (4) montée de manière rotative et à distance de celle-ci,
**caractérisé en ce que** le dispositif de coupe à longueur (13 ; 14 ; 15 ; 16) présente un corps de base (25) avec une surface de guidage radial (26) concave, en particulier en forme d'arc de cercle, qui se présente sous la forme d'un moyen de coupe à longueur (19),
dans lequel un pellet (11), qui déborde de la filière annulaire (4) dans la direction radiale de celle-ci et/ou est pressé radialement vers l'extérieur dans la zone d'un rouleau-presseur (7 ; 8) de la presse à pelleter (1), vient en appui avec la face frontale de son extrémité libre (20) contre la surface de guidage radial (26) et se déplace le long de celle-ci dans la direction circonférentielle de la filière annulaire (4) de telle sorte que le pellet (11) soit dévié de la surface de guidage radiale (26) au moyen d'une force de friction agissant dans la direction circonférentielle de la filière annulaire (4), de sorte qu'il se coude dans la zone de la filière annulaire (4).
